# EUROPEAN PATENT SPECIFICATION

(11) **EP 1 357 749 B1**
(45) Date of publication and mention of the grant of the patent: **10.08.2005**
(21) Application number: 03003923.4
(22) Date of filing: 21.02.2003
(51) Int. Cl.: H04N 7/00, G11B 27/10

(54) **System and method for enhanced navigation of multimedia DVD**
System und Verfahren für verbesserte Navigation einer Multimedia-DVD
Sytème et procédé pour navigation améliorée dans un DVD

(30) Priority: 26.02.2002 JP 2002049749
(43) Date of publication of application: 29.10.2003
(73) Proprietor: Kabushiki Kaisha Toshiba, Tokyo (JP)
(72) Inventor: Tsumagari, Yasufumi, Kabushiki Kaisha Toshiba, Tokyo 105-8001 (JP); Mimura, Hideki, Kabushiki Kaisha Toshiba, Tokyo 105-8001 (JP); Takahashi, Hideki, Kabushiki Kaisha Toshiba, Tokyo 105-8001 (JP)
(74) Representative: Wenning, Ekkehard

(56) References cited:
- EP-A- 0 762 422
- EP-A- 0 814 419
- EP-A- 1 148 502
- WO-A-01/35405
- WO-A-01/50217
- US-A- 6 138 175
- US-B1- 6 188 835
- US-B1- 6 233 393
- MIMURA H: "DVD-Video format" COMPCON '97. PROCEEDINGS, IEEE SAN JOSE, CA, USA 23-26 FEB. 1997, LOS ALAMITOS, CA, USA,IEEE COMPUT. SOC, US, 23 February 1997 (1997-02-23), pages 291-294, XP010219552 ISBN: 0-8186-7804-6

## Description

The present invention relates to an enhanced navigation system that uses a digital information medium complying with the DVD-Video standard.

More specifically, the present invention relates to a DVD video playback system which acquires navigation information from the recorded contents on a DVD video disc and/or the Internet or the like, and allows diversified playback using the acquired navigation information compared to conventional DVD-Video.

Currently, as package media of digital video, DVD-Video has become increasingly prevalent. The DVD-Video is specified by [DVD Specifications for Read-Only Disc: Part 3: VIDEO SPECIFICATIONS: Version 1.0 (CONFIDENTIAL)] issued August 1996 from the DVD forum.

The DVD-Video standard specifies presentation data that records actual video·audio (or AV) data, and navigation data used to manage such data. In this standard, presentation data (playback information) that contain video (moving image/still image) data, audio data, sub-picture data, and the like are multiplexed according to the specifications of a program stream (2048 bytes). The navigation data (management information) describes program chains (PGC) and cells which set the time configuration and playback order of video·audio data to be played back, thus implementing functions such as multi-angle playback, multi-story playback, and parental control (access control for children and the like).

However, a conventional DVD-Video player based on the DVD-Video standard (version 1.0) can play back only an MPEG2 program stream recorded on a DVD video disc (information recording medium). For this reason, even when information other than the MPEG2 program stream is recorded on the DVD video disc, existing DVD-Video players cannot play back information other than the MPEG2 program stream.

As the prior art that can store information (Hypertext information/HTML, programs, script macros, and the like) other than an MPEG2 program stream (DVD-Video contents) on a storage medium such as a DVD or the like, and can play back information other than the MPEG2 program stream, for example, "Data Storage Method for Storage Media, and Interactive Video Playback Apparatus" disclosed in Jpn. Pat. Appln. KOKAI Publication No. 10-136314 is known. This reference discloses an interactive video playback method and apparatus that play back multimedia information from package media such as optical discs and the like, and network media such as network servers and the like. In this reference, a recording medium stores specific condition playback data (program, script macro, and the like).

However, this reference does not have any concrete disclosure about a method of incorporating information (HTML, script, and the like) other than the current DVD-Video standard in the data structure of the current DVD-Video standard (version 1.0). Hence, there is no assurance that a DVD disc that includes the technique of this reference is compatible to the current DVD-Video standard. (This reference merely quotes "DVD" as an example of recording media; and does not take compatibility to the current DVD-Video standard into account.) Nevertheless, if the compatibility to the current DVD-Video standard (version 1.0) is not taken into consideration, the aforementioned problem "the conventional DVD-Video player cannot play back information other than the MPEG2 program stream" can be solved. That is, a conventional personal computer with a DVD-ROM/DVD-RAM drive can play back information other than the MPEG2 program stream, e.g., a computer program (not MPEG-encoded) recorded on a DVD-ROM.

Also, the current DVD-Video standard (version 1.0) can assure some interactive features with the user such as multi-angle playback, multi-story playback, and the like. However, such interactive features are fixed to some extent after contents production of a DVD video disc, and it is difficult to add a wide variety of interactive features to a DVD video disc that has undergone contents production.

As a method of adding a wide variety of interactive features after contents production, a method of importing information (playback control information described in a markup language, script language, or the like, data that this playback control information refers to, and so forth) used to add interactive features from the Internet or the like to a DVD-Video player may be used. A disclosure in Jpn. Pat. Appln. KOKAI Publication No. 10-136314 above is close to this concept (this reference describes an interactive video playback method for playing back multimedia information from network media).

However, upon acquiring multimedia information from network media and adding a wide variety of interactive features by the playback method of a DVD video disc, since the invention of the above reference does not practically take the compatibility to the current DVD-Video standard (version 1.0) into account, how to control the playback contents (video contents) of an actual DVD video disc cannot be specifically recognized upon interactively controlling the actual DVD video disc (not a DVD-ROM that records computer data and the like but a DVD video disc) using information imported from the Internet or the like.

As another reference related to the aforementioned parent publication, "Data Synchronous Playback Apparatus for a Plurality of media" disclosed in Jpn. Pat. Appln. KOKAI Publication No. 11-98467 is known. In this reference, a required image downloaded from the Internet is stored in an internal storage unit, disc information and external medium information are synchronously mixed and displayed on the basis of the stored image, and timing data and a layout signal stored in an internal disc.

With the invention of this reference, information in the internal disk, and information acquired from the Internet can be synchronously displayed. However, this invention has no function of selecting various display methods as needed, e.g., a method of displaying disc information alone, a method of displaying Internet acquired information alone, and a method of displaying those pieces of information at different timings. Especially, Jpn. Pat. Appln. KOKAI Publication No. 11-98467 has no disclosure about control for Internet acquired information in accordance with the playback state of a DVD disc. Also, this invention does not have any function of giving the switching timings of these various display methods in accordance with a user's instruction or playback control information recorded in advance on a disc (or playback control information downloaded from the Internet).

Furthermore, since the invention of this reference does not practically take the compatibility to the current DVD-Video standard (version 1.0) into account, how to control the playback contents (video contents) of an actual DVD video disc (more specifically, the types and timings of control signals, and their sources and destinations) upon interactively controlling the actual DVD video disc using information downloaded from the Internet or the like is not apparent.

US 6 223 393 discloses a medium according to the precharacterizing part of claim 1. According to this state of the art, in a system having a digital video disc (DVD) player and a number of presentation devices (such as a television receiver, video cassette recorder/reproducer, and so forth), the DVD player may transmit presentation data and a portion of control or navigation data obtained from a digital video disc (DVD) to a desired one of the presentation devices in an isochronous communication manner so as to enable the respective presentation device to process or decode the presentation data in accordance with the transmitted portion of the navigation data without substantial time delays (or in real time). The remaining portion of the navigation data (which is not utilized in such real time processing) may be transmitted from the DVD player to the respective presentation device in an asynchronous communication manner. Such arrangement of isochronous and asynchronous communication enables processing to be performed by the respective presentation device so as to reduce the amount of processing which may otherwise have to be performed by the DVD player.

The present invention has its object to provide an enhanced navigation system that can add a wide variety of interactive features to playback of AV (video and/or audio) contents after production while assuring the compatibility (at least upward compatibility) to the current or legacy DVD-Video (and/or Audio) standard.

According to the present invention the above object is achieved by an information medium according to claim 1. The dependent claims are related to further advantageous aspects of the invention.

In order to achieve the above object, an information medium (optical disc, hard disc, etc.) according to an aspect of the present invention, which can be used to form the aforementioned system, may have a lead-in area, volume space, and lead-out area, and the volume space, includes a volume/file structure information area, video area, and/or another recording area. In this information medium, the video area includes AV contents complying with the DVD-Video (or Audio) standard, and the other recording area can include navigation contents which can be played back in association with the contents (menus, chapters) of the video contents. The navigation contents have contents that control to play back the AV contents in connection, combination, and/or synchronism with playback of the navigation contents.

An apparatus according to an aspect of the present invention, which forms the aforementioned system, may comprise a player unit, a video playback engine, and a navigation engine. The player unit is configured to play back recorded contents, that contents may include AV contents and navigation contents which can be played back in association with the playback contents (menus, chapters) of the video contents, from a digital video (or audio) disc. This disc may have a volume space complying with the DVD-Video (or Audio) standard. The video playback engine is configured to play back the AV contents of the recorded contents on the disc. The navigation engine is configured to play back the navigation contents of the disc, and is configured to control playback of the navigation contents in connection with the AV contents according to the navigation contents.

In an apparatus according to another aspect of the present invention, which forms the aforementioned system, the navigation engine has a first interface configured to receive the navigation contents from a digital video disc having a volume space complying with the DVD-Video (or Audio) standard, and a second interface configured to acquire other navigation contents via a communication line (such as Internet).

Assume that a state in which the digital video disc is loaded to the player unit, and the second interface is disconnected from the communication line (net disconnected) is an off-line mode. Also, a state in which the digital video disc is ejected from the player unit, and the second interface is connected to the communication line (net connected) is assumed to be an on-line mode. Furthermore, a state in which the digital video disc is loaded to the player unit, and the second interface is connected to the communication line (net connected) is assumed to be a mixed mode. Then, upon detection of a predetermined switch trigger (a trigger generated in response to insertion/ejection of a disc or connection/disconnection of a net; corresponding to mode switch events), mode transition is automatically made among the off-line mode, on-line mode, and mixed mode-in accordance with a predetermined transition rule.

This summary of the invention does-not necessarily describe all necessary features. The invention is set out in the claims to which reference is now directed.

The invention can be more fully understood from the following detailed description when taken in conjunction with the accompanying drawings, in which:
FIG. 1 is a block diagram for explaining an example of the arrangement of a "DVD-Video player incorporating an enhanced navigation system (ENAV system)" according to an embodiment of the present invention;
FIGS. 2A-2C are views for explaining a display example upon outputting a playback video on the DVD-Video contents side and that on the ENAV contents side as a multi-frame output in the arrangement shown in FIG. 1;
FIGS. 3A-3C are views for explaining a display example upon outputting a playback video on the DVD-Video contents side and that on the ENAV contents side on multi-windows (overlapping windows) in the arrangement shown in FIG. 1;
FIGS. 4A-4E are views for explaining an example upon mixing a playback audio on the DVD-Video contents side and that on the ENAV contents side in the arrangement shown in FIG. 1;
FIG. 5 is a view for explaining an example of changes in DVD video playback output (DVD video menu) and ENAV playback output (ENAV menu) in correspondence with an internal command;
FIG. 6 is a flow chart for explaining an example of the processes of a DVD-Video playback engine and ENAV engine in association with menu call by a command;
FIG. 7 is a view for explaining a menu display example (full video mode) on the video contents side;
FIG. 8 is a view for explaining a menu display example (full ENAV mode) on the ENAV contents side;
FIG. 9 is a view for explaining an example of changes in DVD video playback output (DVD video chapter playback) and ENAV playback output (ENAV contents playback) in correspondence with an internal command;
FIG. 10 is a flow chart for explaining an example of the processes of the DVD-Video playback engine and ENAV engine in association with chapter playback;
FIG. 11 is a view for explaining a display example (mixed frame mode) of a mixed menu of the video and ENAV contents;
FIG. 12 is a view for explaining a display example (mixed frame mode) of a mixed video of the video and ENAV contents;
FIG. 13 is a view for explaining an example of changes in DVD video playback output (DVD video menu) and ENAV playback output (ENAV menu) in correspondence with user's operation (user event);
FIG. 14 is a flow chart for explaining an example of the processes of the DVD-Video playback engine and ENAV engine in association with menu call by the user;
FIG. 15 is a view for explaining an example of changes in DVD video playback output (DVD video menu or playback pause) and ENAV playback output (ENAV menu) in correspondence with user's operation (user event);
FIG. 16 is a flow chart for explaining an example (first half) of the processes of the DVD-Video playback engine and ENAV engine in association with menu call or playback pause by the user;
FIG. 17 is a flow chart for explaining an example (second half) of the processes of the DVD-Video playback engine and ENAV engine in association with menu call or playback pause by the user;
FIGS. 18A-18C are views for explaining a case wherein ENAV content 1 is played back before playback of chapter 1, and ENAV content 2 is played back in synchronism with playback of chapters 1 and 2 when the DVD-Video playback engine successively plays back chapters 1 to 4;
FIG. 19 is a view for explaining a case (case 1) wherein the DVD-Video playback engine outputs a PTT event with a chapter number as a DVD event at the beginning of each chapter, and the ENAV engine begins to play back corresponding ENAV contents;
FIG. 20 is a view for explaining a case (case 2) wherein the DVD-Video playback engine exchanges event/status data with the ENAV engine, and the ENAV engine plays back ENAV contents on the basis of the exchange result;
FIG. 21 is a view for explaining another case (case 3) wherein the DVD-Video playback engine outputs a PTT event with a chapter number as a DVD event at the beginning of each chapter, and the ENAV engine begins to play back corresponding ENAV contents;
FIG. 22 is a flow chart for explaining an operation example of the DVD-Video playback engine, an event generation·command/property processor, and an ENAV interpreter in correspondence with the case of FIG. 19 (case 1);
FIG. 23 is a flow chart for explaining an operation example of the DVD-Video playback engine, event generation·command/property processor, and ENAV interpreter in correspondence with the case of FIG. 20 (case 2);
FIG. 24 is a flow chart for explaining an operation example of the DVD-Video playback-engine, event generation·command/property processor, and ENAV interpreter in correspondence with the case of FIG. 21 (case 3);
FIG. 25 is a view for explaining selectable paths among a plurality of modes (off-line mode, on-line mode, mixed mode) in the system arrangement of FIG. 1;
FIG. 26 is a flow chart for explaining an example of which one of the plurality of modes shown in FIG. 25 is set first;
FIG. 27 is a flow chart for explaining an example of the processing contents in the current mode (one of the plurality of modes shown in FIG. 25);
FIG. 28 is a flow chart for explaining a processing example when the current mode automatically transits to another mode depending on whether or not a DVD disc is inserted in a DVD-Video player, whether or not an Internet connection unit is connected to the Internet, and the like, which are determined in the state check steps in the process shown in FIG. 27;
FIG. 29 is a view for explaining an example of a transition rule which is referred to upon determining the mode transition destination in the process shown in FIG. 28;
FIG. 30 is a view for explaining an example of a DVD video disc which can be played back by the DVD-Video player in FIG. 1, and in which ENAV contents 30 are stored in an area other than a DVD-Video area;
FIG. 31 is a view for explaining an example of a DVD video disc which can be played back by the DVD-Video player in FIG. 1, and in which ENAV contents 30 are stored in a DVD-Video area;
FIG. 32 is a view for explaining a video output result on the basis of a layout control signal shown in FIG. 1;
FIG. 33 is a view for explaining an audio output result on the basis of a layout control signal shown in FIG. 1; and
FIG. 34 is a flow chart for explaining an example of recording processes of information on an information medium such as a DVD-Video disc, DVD-Audio disc, a hard disc, or the like.

An "enhanced navigation system using a digital information medium" according to various embodiments of the present invention will be described hereinafter with reference to the accompanying drawings. The following explanation will be given under the condition, for example, that this system is applied to a playback apparatus and method of a DVD video disc complying with the DVD-Video standard.

The data structure of a disc that takes the compatibility with the existing DVD-Video standard (version 1.0) into account will be described first.

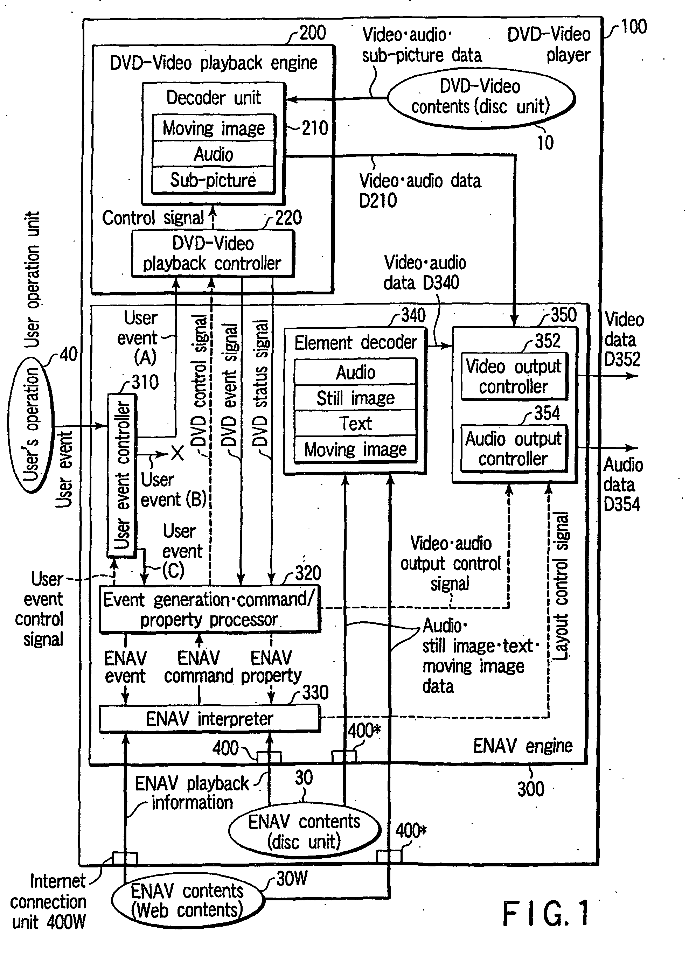

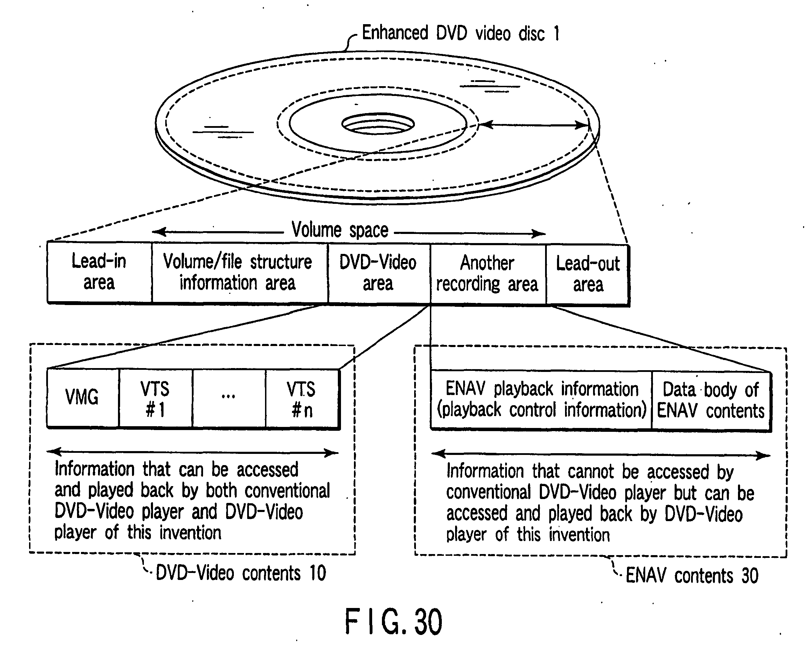

FIG. 30 shows an example of the data structure of DVD video disc 1 which can be played back by DVD-Video player 100 in FIG. 1 (to be described later). In this example, DVD-Video contents 10 (having an MPEG2 program stream structure) with the same data structure as the conventional DVD-Video standard (version 1.0) are stored in a DVD-Video area. Also, enhanced navigation (to be abbreviated as ENAV hereinafter) contents 30, which allow diversified playback of video contents (or AV contents) 10, can be recorded in another recording area, the presence of which is officially recognized in the DVD-Video standard.

Since the contents of the DVD-Video area are conventionally known (to those who are skilled in the art such as the manufacturers of DVD-Video players and the like), they will be briefly explained below.

More specifically, the recording area of DVD video disc 1 includes a lead-in area, volume space, and lead-out area in turn from the inner periphery. The volume space includes a volume/file structure information area, and DVD-Video area (DVD-Video zone), and can also include another recording area (DVD-Other zone) as an option.

The volume/file structure information area is assigned for the UDF (Universal Disk Format) bridge structure. The volume of the UDF bridge format is recognized in accordance with ISO/IEC13346 Part 2. A space that recognizes this volume consists of successive sectors, and starts from the first logical sector of the volume space in FIG. 30. First 16 logical sectors are reserved for system use specified by ISO9660. In order to assure the compatibility to the existing DVD-Video standard (version 1.0), the volume/file structure information area with such contents is required.

The DVD-Video area records management information called video manager VMG and one or more video contents (or AV contents) called video title sets VTS (VTS#1 to VTS#n). VMG is management information for all VTSs present in the DVD-Video area, and contains control data VMGI, VMG menu data VMGM_VOBS (option), and VMG backup data (none of them are shown). Each VTS contains control data VTSI of that VTS, VTS menu data VTSM_VOBS (option), data VTSTT_VOBS of the contents (movie or the like) of that VTS (title), and VTSI backup data (none of them are shown). To assure the compatibility to the existing DVD-Video standard (version 1.0), the DVD-Video area with such contents is also required.

A playback select menu or the like of each title (VTS#1 to VTS#n) is given in advance by a provider (the producer of DVD video disc 1) using VMG, and a playback chapter select menu, the playback order of recorded contents (cells), and the like in a specific title (e.g., VTS#1) are given in advance by the provider using VTSI. Therefore, the viewer of disc 1 (the user of the DVD-Video player) can enjoy the recorded contents of that disc 1 in accordance with menus of VMG/VTSI prepared in advance by the provider and playback control information (program chain information PGCI) in VTSI. However, with the conventional DVD-Video standard (version 1.0), the viewer (user) cannot play back the contents (movie or music) of each VTS by a method different from VMG/VTSI prepared by the provider.

ENAV contents (or ENAV content) 30 in FIG. 30 are prepared as a mechanism that allows the user to play back the contents (movie or music) of each VTS by a method different from VMG/VTSI prepared by the provider, and to play back while adding contents different from VMG/VTSI prepared by the provider. ENAV contents 30 cannot be accessed by a DVD-Video player which is manufactured on the basis of the conventional DVD-Video standard (version 1.0) (even if ENAV contents 30 can be accessed, their contents cannot be used). However, a DVD-Video player (player 100 in FIG. 1 or the like) can access ENAV contents 30, and can use their playback contents.

Logically, ENAV contents 30 can be classified into ENAV playback information, and the data body of ENAV contents. The data body of ENAV contents contains audio data, still image data, text data, moving image data, and the like. The ENAV playback information contains a markup language, script language, or the like, which describes playback methods (display method, playback order, playback switch sequence, selection of data to be played back, and the like) of the ENAV contents data body and/or DVD-Video contents 10.

For example, as a language used as the playback control information, markup languages such as HTML (Hyper Text Markup Language)/XHTML (extensible Hyper Text Markup Language), SMIL (Synchronized Multimedia Integration Language), and the like, script languages such as ECMA (European Computer Manufacturers Association) Script, JavaScript, and the like, and so forth can be used in combination. The description contents of the ENAV playback information described in these languages are parsed by ENAV interpreter 330 in FIG. 1 to interpret the parsed contents.

More specifically, the ENAV playback information can contain file information of the ENAV contents (information of a file to be referred to, and information of a file to be referred to instead if the file to be referred to is not present or if a player does not have a function of decoding the file if that file is present), layout information (the coordinate position of an object to be displayed on a display screen, and information indicating the depth ordering if that object overlaps another object), size information (information indicating the size of each object to be displayed), synchronization information (information used to control to play back the DVD-Video contents in connection or combination with that of the ENAV contents at a predetermined timing), and duration information (information indicating the display time range or timing range of the ENAV contents).

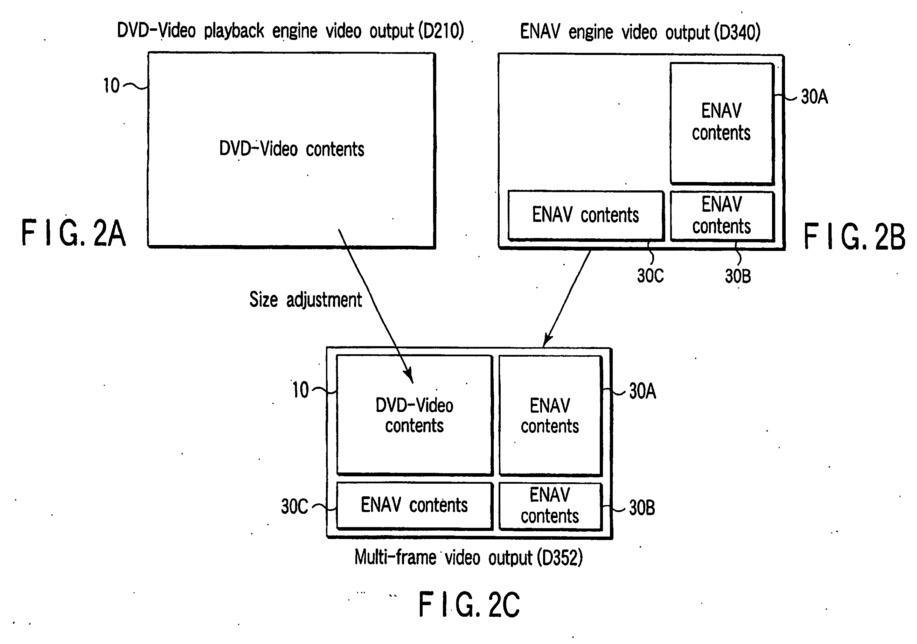

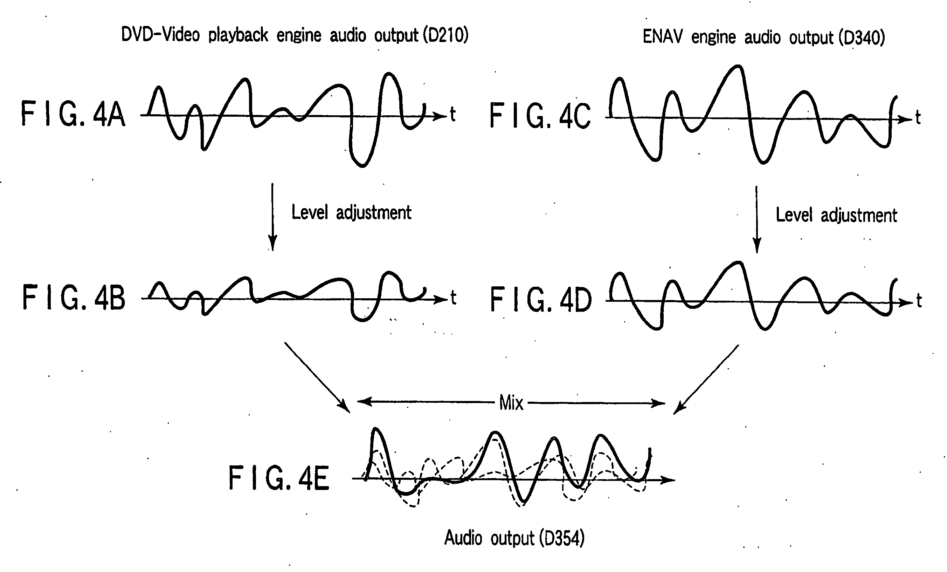

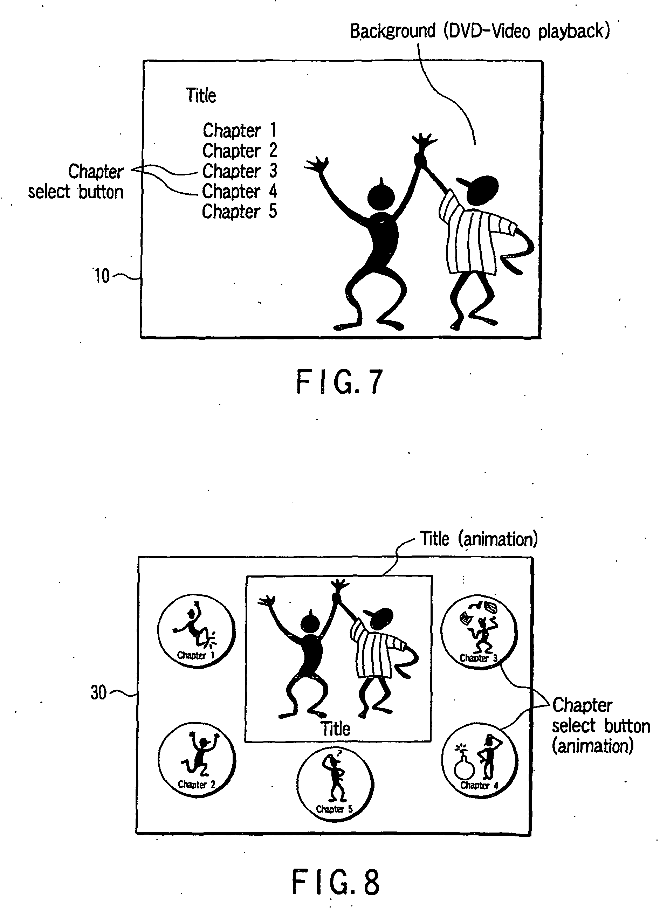

Using the ENAV playback information, for example, output methods menu, video, and/or audio data contained in video contents 10 or ENAV contents 30 can be described (see FIGS. 7, 8, and 11 to be described later for an example of a menu output method; see FIGS. 2, 3, and 12 to be described later for an example of a video output method; see FIGS. 4A-4E to be described later for an example of an audio output method).

In DVD video disc 1 in FIG. 30, since the contents other than the other recording area comply with the current DVD-Video standard (version 1.0), video contents 10 recorded on the DVD-Video area can be played back using the conventional DVD-Video player (i.e., the compatibility to the conventional player can be assured).

ENAV contents 30 recorded in the other recording area cannot be played back (or cannot be used) by the conventional DVD-Video player, but can be played back and used by the DVD-Video player (FIG. 1) according to an embodiment of the present invention. Therefore, when ENAV contents 30 are played back using the DVD-Video player according to an embodiment of the present invention, various video playback processes can be made without being limited by only the contents of VMG/VTSI prepared in advance by the provider (examples of such various video playback processes will be explained later with reference to FIGS. 1 to 29 as needed).

In the arrangement of FIG. 30, the aforementioned ENAV playback information can be physically recorded on disc 1 together with the ENAV contents data body or independently.

As a method for the former allocation, ENAV dedicated packs ENV_PCK may be assured at, e.g., the head of an access unit (corresponding to video object unit VOBU in the current DVD-Video standard) (or after navigation pack NV_PCK located at the head in VOBU), and the ENAV playback information may be recorded in these packs ENV_PCK while being repacked into smaller sizes.

As a method for the latter allocation, an area independent from the ENAV contents data body may be assured like VMG (or VTSI) in the DVD-Video area, and the ENAV playback information may be recorded in this area. With this method, the DVD-Video player (FIG. 1) according to an embodiment of the present invention preferably reads the ENAV playback information prior to the ENAV contents data body (if an ENAV playback control method is read and stored in a memory in advance, a process of the ENAV contents data body can be started without any delay when the ENAV contents data body is read).

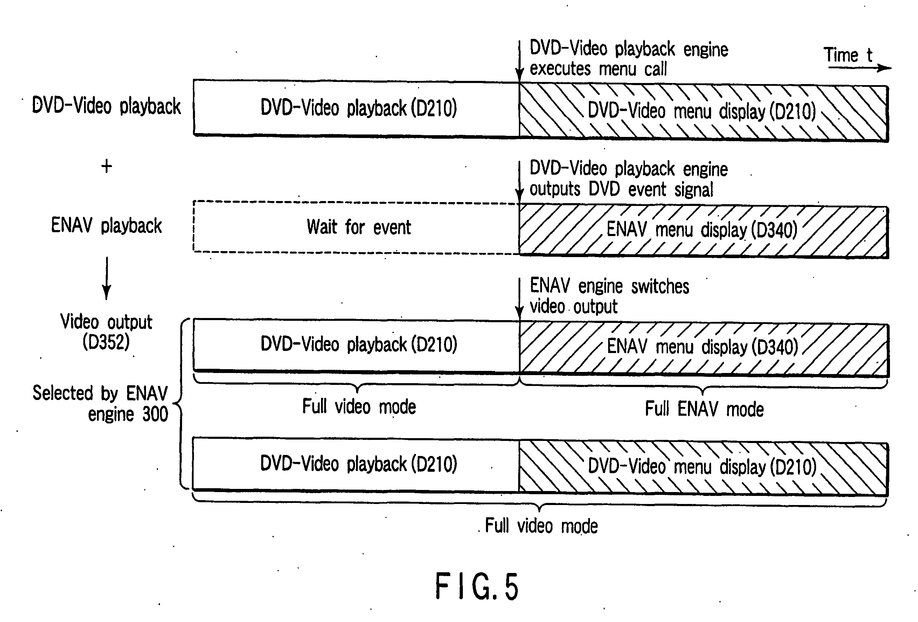

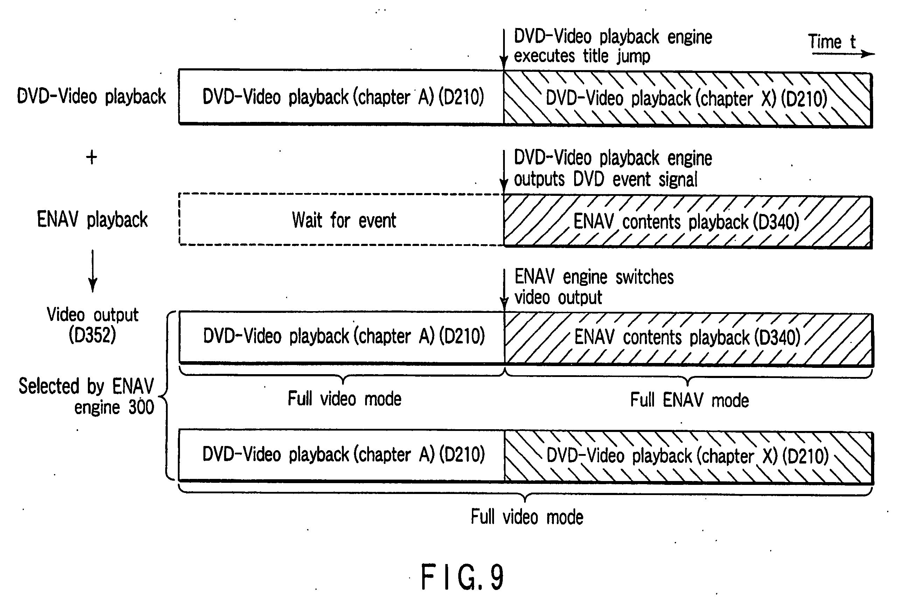

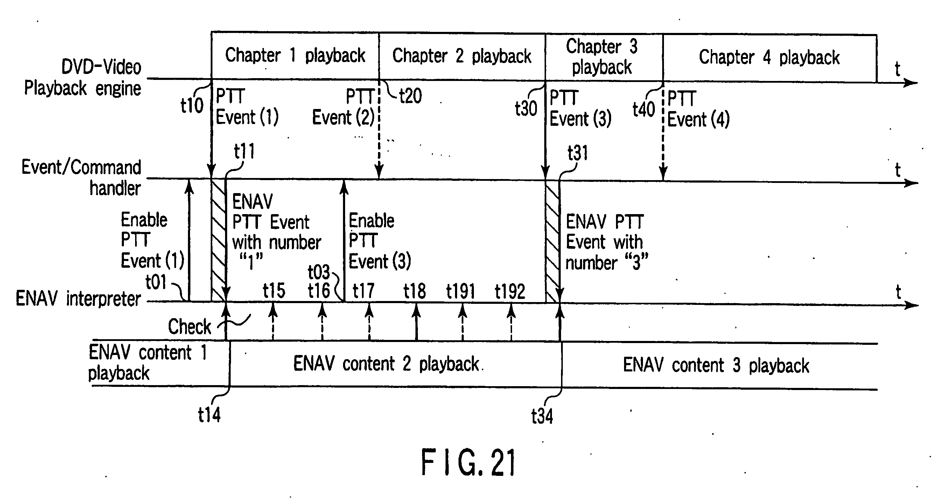

To summarize, disc 1 in FIG. 30 can be considered as an information medium with the following arrangement. That is, this information medium has a lead-in area, volume space, and lead-out area, and the volume space includes a volume/file structure information area, video area, and another recording area in conformity to the DVD-Video standard. The video area includes video contents 10 complying with the DVD-Video standard, and the other recording area includes navigation contents 30 which can be played back in association with the contents (menus, chapters, and the like) of video contents 10 (see FIGS. 5, 9, and the like to be described later). Navigation contents 30 have contents that control to play back video contents 10 in connection, combination, or synchronism with playback of navigation contents 30 (see broken arrows in FIGS. 21 to 23).

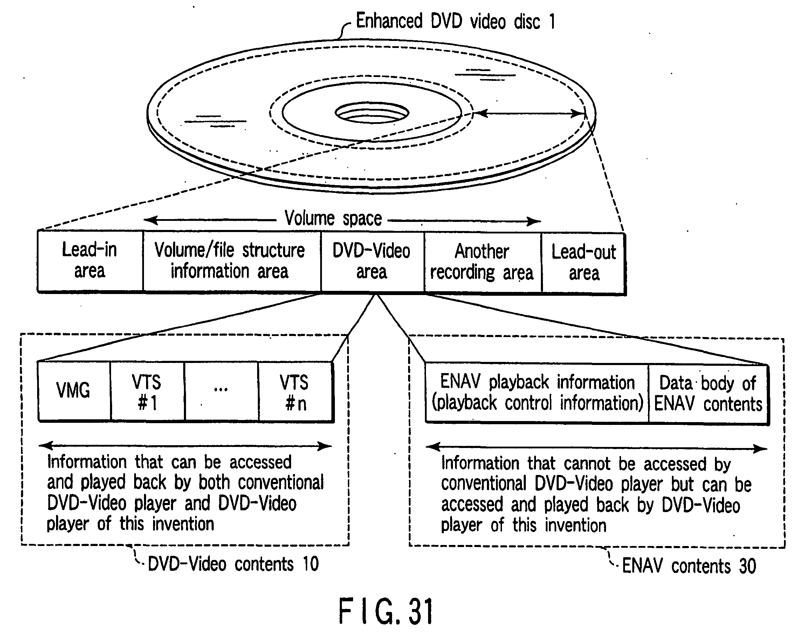

FIG. 31 shows another example of the data structure of DVD video disc 1 that can be played back by DVD-Video player 100 in FIG. 1 (to be described later). In this example, DVD-Video contents 10 (having an MPEG2 program stream structure) having the same data structure as the conventional DVD-Video standard (version 1.0) are stored in a DVD-Video area, and ENAV contents 30 that can diversify playback of video contents 10 can be recorded on the end side of this DVD-Video area (after the recording end position of video contents 10).

Alternatively, ENAV contents 30 that cannot be accessed by the conventional DVD player but can be accessed by the DVD player according to an embodiment of the present invention can be recorded between a given video title set (VTS#i) and another video title set (VTS#j ≠ VTS#i) although not shown. As an example of a practical method of inhibiting the conventional DVD player from accessing contents 30, ENAV contents 30 may be allowed to be accessed using only commands (e.g., a Jump command, GoTo command, and the like having special operation codes) which are not specified by the conventional DVD-Video standard (version 1.0).

If VMG or VTSI described above with reference to FIG. 30 is described to refer to only the recorded area (addresses) of DVD-Video contents 10, the conventional DVD-Video player never accesses ENAV contents 30 with reference to VMG or VTSI. On the other hand, in the DVD-Video player according to an embodiment of the present invention, an ENAV mode that activates ENAV may be prepared, and access to the end of the DVD-Video area may be allowed in this ENAV mode. In this way, the DVD-Video player (FIG. 1) according to an embodiment of the present invention can access ENAV contents 30 recorded on the end side of the DVD-Video area, and can use their contents.

To summarize, disc 1 in FIG. 31 can be considered as an information medium with the following arrangement. That is, this information medium has a lead-in area, volume space, and lead-out area, and the volume space includes a volume/file structure information area and video area. The video area includes video contents 10 complying with the DVD-Video standard, and navigation contents 30 which can be played back in association with the contents (menus, chapters, and the like) of video contents 10. Navigation contents 30 have contents that control to play back video contents 10 in connection, combination, or synchronism with playback of navigation contents 30.

As practical methods of playing back ENAV contents 30 recorded on disc 1 in FIG. 30 or 31, for example, a method of providing a select button of ENAV contents 30 to a DVD menu (VMG menu or VTS menu), and allowing the user to select the ENAV contents button by operating cursor keys and an enter key, and a method of automatically accessing ENAV contents 30 based on internal commands (navigation commands such as a GoTo command, Jump command, and the like) of the DVD-Video player are available.

When the select button of the former method is used, for example, the following process may be done. That is, the user selects (selection) and determines (action) a button (ENAV contents select button in this case) displayed on a menu, thereby playing back contents (ENAV contents 30 in this case) corresponding to that button. This method is the same as that adopted in existing DVD-Video players.

When the internal commands of the latter method are used, for example, a GoTo command consists of an operation code, reserved area, and GoTo operand. This command format remains the same to maintain the compatibility to the conventional DVD-Video standard (version 1.0), but the contents of the operation code and operand can be changed according to an embodiment of the present invention. For example, since operation codes "0000h" to "0003h" have contents that have already been specified by the DVD-Video standard (version 1.0), an embodiment of the present invention specifies a new operation code "0004h" that makes the control go to ENAV contents 30. Information indicating the recorded location of ENAV contents 30 can be written in the operand of that GoTo command.

A Jump command consists of an operation code, Jump operand, and reserved area. This command format remains the same to maintain the compatibility to the conventional DVD-Video standard (version 1.0), but the contents of the operation code and operand can be changed according to an embodiment of the present invention. For example, since operation codes "3001h" to "3008h" have contents that have already been specified by the DVD-Video standard (version 1.0), an embodiment of the present invention specifies a new operation code "3009h" that make the control jump to ENAV contents 30 as an operation code of the Jump command. Information indicating the recorded location of ENAV contents 30 can be written in the operand of that Jump command.

Note that DVD-Video contents 10 of DVD video disc 1 exemplified in FIG. 30 or 31 are not limited to a movie, multi-story drama, music program with multi-angle video data, and the like, and may contain software such as a computer game which is required to have high interactive features.

FIG. 1 is a block diagram for explaining an example of the arrangement of "DVD-Video player 100 that incorporates the enhanced navigation system (ENAV system) according to an embodiment of the present invention. This DVD-Video player 100 plays back arid processes the recorded contents (DVD-Video contents 10 and/or ENAV contents 30) from enhanced DVD video disc 1 "compatible to the conventional DVD-Video standard (version 1.0)" shown in FIG. 30 or 31, and imports and processes ENAV contents (a kind of Web contents) 30W from a communication line such as the Internet or the like.

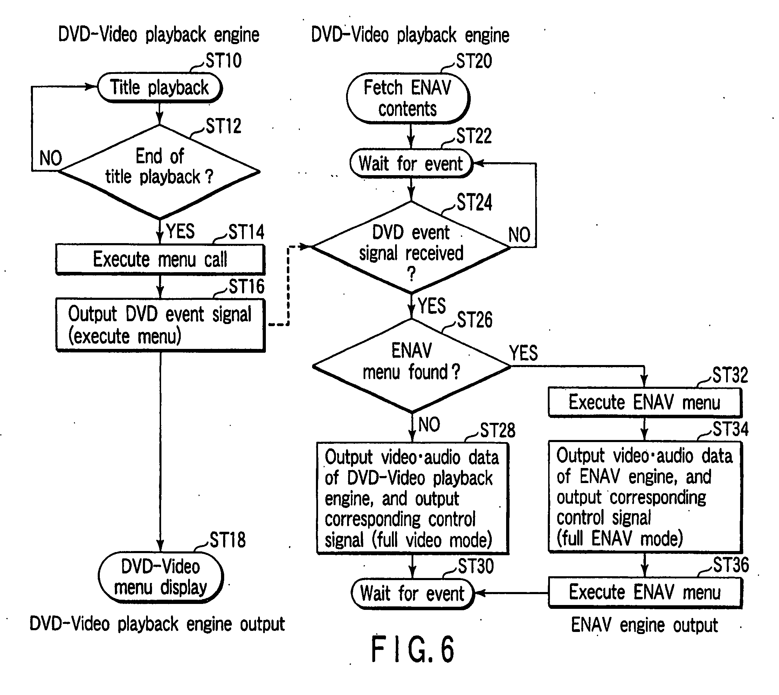

In the block arrangement shown in FIG. 1, DVD-Video playback controller 220, user event controller 310, event generation.command/property processor 320, ENAV interpreter 330, and the like can be implemented by a microcomputer (and/or hardware logic) which serves the functions of respective blocks based on an embedded program (firmware) (not shown). More specifically, the processes of the flow charts shown in FIG. 6 and the like can be implemented by a microcomputer (not shown) that executes the firmware. A work area used upon executing the firmware can be assured using a semiconductor memory (not shown) (and a hard disc as needed) in the block arrangement.

Disc 1 to be played back by player 100 in FIG. 1 records DVD-Video contents 10 having an MPEG2 program stream structure, and ENAV contents 30 that contain information (video information such as a moving image, still image, animation, and the like, audio information, text information, and the like) other than the MPEG2 program stream structure. Web contents such as video information, audio information, text information, and the like, which are acquired from the Internet or the like are downloaded to player 100 as ENAV contents 30W.

In this embodiment, all kinds of video·audio·text information other than the MPEG2 program stream recorded on disc 1 will be referred to as "ENAV contents (Enhanced Navigation contents)". The ENAV contents contain information (ENAV playback information) that controls to play back such video·audio·text information in synchronism (or connection or combination) with DVD-Video contents 10, in addition to the video·audio·text information.

DVD-Video player 100 in FIG. 1 comprises DVD-Video playback engine 200 for playing back and processing the MPEG2 program stream (DVD-Video contents 10) recorded on disc 1, and ENAV engine 300 for playing back and processing ENAV contents 30 (and/or 30W). This player 100 further comprises a disc unit (normally configured as a DVD disc drive: since this unit can be configured by the prior art, a detailed arrangement thereof is not shown) for reading out DVD-Video contents 10 and/or ENAV contents 30 recorded on disc 1, a user operation unit (a control panel of player 100 and/or remote controller: a detailed arrangement thereof is not shown) for transmitting user's inputs (user's operation 40), and an Internet connection unit for connecting a communication line such as the Internet or the like.

DVD-Video playback engine 200 is a device for playing back DVD-Video contents 10 on the basis of the existing DVD-Video standard (version 1.0), and includes decoder unit 210 for decoding DVD-Video contents 10 read by the disc unit, and DVD-Video playback controller 220 for controlling playback of DVD-Video contents 10.

Decoder unit 210 has a function of decoding video data, audio data, and sub-picture data based on the existing DVD-Video standard, and outputting decoded video·audio data D210. With this function, DVD-Video playback engine 200 has the same function as that of a playback engine of a normal DVD-Video player, which is manufactured on the basis of the existing DVD-Video standard (version 1.0). That is, player 100 of FIG. 1 can play back video data, audio data, and the like having the MPEG2 program stream structure in the same manner as a normal DVD-Video player and, hence, can play back existing DVD video discs (discs complying with the DVD-Video standard version 1.0).

In addition, DVD-Video playback controller 220 can control playback of DVD-Video contents 10 in accordance with a "DVD control signal" output from ENAV engine 300. More specifically, when a given event (e.g., menu call or title jump) has occurred during DVD-Video playback, DVD-Video playback controller 220 can output a "DVD event signal" indicating the playback condition of DVD-Video contents 10 to ENAV engine 300. In this case (simultaneously with output of the DVD event signal or an appropriate timing before or after that output timing), DVD-Video playback controller 220 can output a "DVD status signal" indicating property information (e.g., an audio language, sub-picture caption language, playback operation, playback position information, time information, the contents of disc 1, and the like set in player 100) of DVD-Video player 100 to ENAV engine 300.

ENAV engine 300 includes user event controller 310, event generation·command/property processor 320, ENAV interpreter 330, element decoder 340, and video·audio output unit 350.

User event controller 310 makes control based on user's operations 40. Controller 310 receives user events corresponding to user's operations (menu call, title jump, playback start, playback stop, playback pause, and so forth) from the user operation unit, or receives a user event control signal from event generation.command/property processor 320, and generates user events (A) to (C) corresponding to the contents of user's operations or the user event control signal.

In the arrangement in FIG. 1, based on the "user event control signal" output from event generation·command/property processor 320, user event controller 310
[01] transmits a user event signal transmitted based on user's operation 40 to DVD-Video playback controller 220 (user event signal (A)),
[02] inhibits transmission ("X") (user event signal (B)), or
[03] transmits the user vent signal to event generation·command/property processor 320 (user event signal (C)).

At this time, a user event signal undergoes the following transmission control.
[11] Upon outputting video data D210 of DVD-Video playback engine 200 (full video mode), user event signal (A) is directly output to DVD-Video playback engine 200. This is because user's operation 40 in the full video mode is the same as that in normal DVD-Video playback.
[12] Upon outputting video data D340 of ENAV engine 300 (full ENAV mode) or upon simultaneously outputting video data D210 of DVD-Video playback engine 200 and video data D340 of ENAV engine 300 by mixing them (mixed frame mode), the following control is made.
[121] When a user event signal is output to event generation·command/property processor 320 (user event signal (C)), event generation·command/property processor 320 outputs as a DVD control signal a function call corresponding to that event (menu call or the like) to DVD-Video playback controller 220 of DVD-Video playback engine 200.
[122] A user event is simultaneously output to both DVD-Video playback engine 200 and event generation·command/property processor 320 (user event signals (A) and (C)).
[123] When DVD-video playback that the system does not intend (for example, a playback method incompatible to currently running DVD-Video playback engine 200 or operation inhibited by user's operation control UOP specified by the current DVD standard) is more likely to be made, transmission of a user event signal is blocked (inhibited or deterred) ("X" of user event signal (B)).

Note that the contents of user event signal (C) transmitted to event generation·command/property processor 320 may be sent to ENAV interpreter 330 in' the form of an ENAV event (and/or ENAV property) as needed. Then, ENAV interpreter 330 can generate a layout control signal with reference to the contents of user event signal (C).

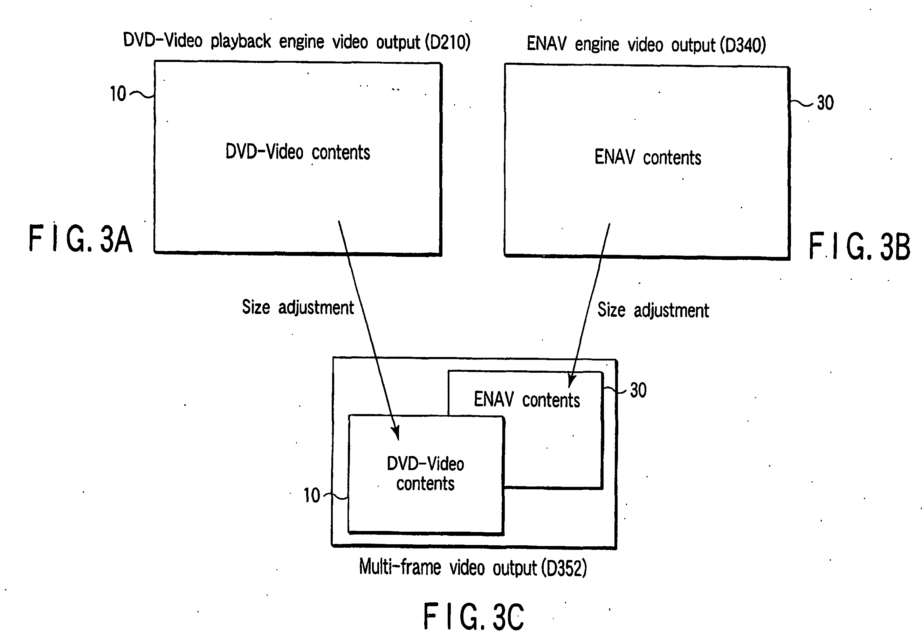

For example, in FIG. 3C (to be described later), when the user has changed the window size of contents 10 or 30 or has shifted its display position using cursor keys of a remote controller (not shown), this operation is sent as user event signal (C) from user event controller 310 to event generation·command/property processor 320. Processor 320 can convert that user event signal into a corresponding ENAV event (window size change event or the like) and/or ENAV property (a variable/parameter or the like indicating the window size after change), then convert the converted event and/or property into a corresponding layout control signal, and send the converted signal to video output controller 352.

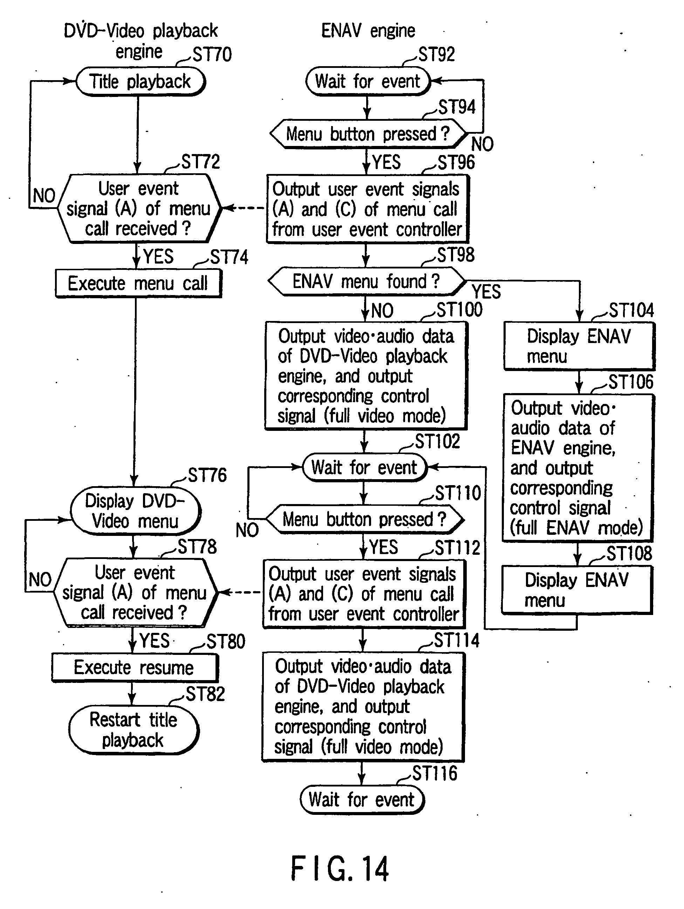

A further explanation of user event signals (A) to (C) will be given later with reference to the flow charts in FIG. 14 and subsequent figures as needed.

Event generation·command/property processor 320 exchanges a DVD status signal, DVD event signal, and/or DVD control signal with DVD-Video playback controller 220, or exchanges a user event and/or user event control signal with user event controller 310. Furthermore, event generation·command/property processor 320 exchanges an ENAV event, ENAV property, and/or ENAV command with ENAV interpreter 330. That is, event generation·command/ property processor 320 serves as an interface between DVD-Video playback engine 200 and ENAV engine 300 by outputting an input DVD status signal as an ENAV property, outputting an input DVD event signal as an ENAV event signal, or converting an input ENAV command into a corresponding DVD control signal and outputting the DVD control signal. Event generation·command/property processor 320 sends a signal that controls the output state of video data and/or audio data to video-audio output unit 350 in accordance with the contents of the DVD status signal and DVD event signal from DVD-Video controller 220, the user event from user event controller 310, and/or the ENAV command from ENAV interpreter 330.

In other words, event generation·command/property processor 320 is configured to exchange a first signal (DVD control signal, DVD event signal, DVD status signal) that pertains to the playback condition of DVD video disc 1 with DVD-Video playback controller 220, and to exchange a second signal (ENAV event, ENAV command, ENAV property) that pertains to the contents (script) of ENAV contents 30 (and/or 30W) with ENAV interpreter 330, on the basis of the contents (command) interpreted by ENAV interpreter 330 or the user event from an input device, and controls the signal output state of video·audio output unit 350 on the basis of at least one of the exchanged first and second signals.

Put differently, event generation·command/property processor 320 interprets ENAV contents 30 (30W), and then converts a control signal and the like between DVD-Video playback engine 200 and ENAV engine 300. More specifically, processor 320 makes, e.g., the following signal output/signal conversion:
<A> Processor 320 interprets ENAV contents 30 (30W), and then outputs (a) a "user event control signal" used to control a user event corresponding to user's operation 40 input from the user operation unit, (b) a "DVD control signal" used to control playback of DVD-Video contents 10 in DVD-Video playback engine 200, and/or (c) a "video·audio output control signal" used to switch between the video·audio output from DVD-Video playback engine 200 and that from ENAV engine 300.
<B> Processor 320 interprets the contents (indicating if an event is menu call, title jump, or the like) of a "DVD event signal" which is sent from DVD-Video playback engine 200 and indicates the playback condition of DVD-Video contents 10, and converts the contents of the interpreted DVD event signal into a corresponding event signal specified in ENAV contents 30 (30W) (e.g., converts a DVD event signal of menu call into an event signal of menu call in ENAV).
<C> Processor 320 interprets the contents (indicating the current audio language, if the disc playback operation is now being done, and so forth) of a "DVD status signal" which is sent from DVD-Video playback engine 200 and indicates the property of DVD-Video player 100, and converts the contents of the interpreted DVD status signal into a corresponding property signal specified in ENAV contents 30 (30W) (e.g., converts a DVD status signal which indicates that the current audio language is Japanese into a property signal that designates Japanese as a language used by ENAV).

Generally speaking, ENAV, interpreter 330 has a function of parsing and interpreting playback control information (ENAV playback information) contained in ENAV contents 30 acquired from DVD video disc 1 or ENAV contents 30W acquired from the Internet or the like, and controlling ENAV engine 300. As a script language used in ENAV playback information, the aforementioned markup languages such as HTML/XHTML, SMIL, and the like may be used, or script languages such as ECMAScript and the like may be used together with the aforementioned markup languages.

As a practical method of parsing and interpreting markups and scripts, the same method as the parsing & interpretation method in the state-of-the-art techniques such as HTML, XHTML, and SMIL, or ECMAScript and JavaScript may be used (hardware to be used is the microcomputer mentioned at the beginning of the description of FIG. 1). The ENAV playback information used upon practicing the present invention uses unique commands and variables associated with playback of the DVD video disc and/or ENAV contents. For example, a command that switches the playback contents of the DVD-Video or ENAV contents in response to a given event is unique to markups or scripts in the ENAV playback information.

As other examples of commands and variables unique to markups or scripts in the ENAV playback information, a command and variable for changing the size of a video from DVD-Video playback engine 200 and/or ENAV engine 300 (a command that instructs size change, and a variable that designates the size after change), and a command and variable for changing the position of the video (a command that instructs to change the display position, and a variable that designates a coordinate position after change: when objects to be displayed overlap each other on the screen, as shown in FIG. 3C (to be described later), a variable that designates the depth ordering of the overlapping objects is added) are used. Also, a command and variable which are sent from DVD-Video playback engine 200 and/or ENAV engine 300 and are used to change an audio level (a command that instructs to change an audio level, and a variable that designates an audio level after change), and a command and variable used to select an audio language to be used (a command that instructs to change an audio language to be used, and a variable that designates the type of language after change) are used. Furthermore, a command and variable that control a user event in user event controller 310 (those used to switch among user event signals (A), (B), and (C)) are used.

ENAV interpreter 330 sends a "layout control signal" that controls the layout on the screen of video data (video data D352) to be displayed on an external monitor or the like (not shown), the size of video data, the output timing of video data, and the output duration of video data, and/or the tone volume level of audio data (audio data D354) to be output from an external loudspeaker (not shown), the output timing of audio data, and the output duration of audio data to the video·audio output unit 350 on the basis of the commands/variables of markups and scripts of the ENAV playback information exemplified above.

Element decoder 340 decodes audio data, still image data, text data, moving image data, and the like contained in the ENAV contents, and includes an audio decoder, still image decoder, text decoder, and moving image decoder in correspondence with data to be decoded. For example, audio data in the ENAV contents encoded by, e.g., MPEG1 is decoded by the audio data and is converted into decompressed audio data. Still image data encoded by MPEG or JPEG is decoded by the still image decoder and is converted into decompressed image data. Likewise, moving image data encoded by, e.g., MPEG2 is decoded by the moving image decoder and is converted into decompressed moving image data. Also, text data contained in the ENAV contents is decoded by the text decoder, and is converted into text image data, which can be superimposed onto a moving or still image. Video·audio data D340 which contains the decoded audio, image, moving image, and text image data is sent from element decoder 340 to video·audio output unit 350.

Video·audio output unit 350 selects one of video·audio data D340 decoded by element decoder 340 and video·audio data D210 output from DVD-Video playback engine 200, or mixes these data (D340 and D210) as needed. Unit 350 includes video output controller 352 and audio output controller 354.

Video output controller 352 has a function of selecting video data (video part of D210) from DVD-Video playback engine 200 or video data (video part of D340) from ENAV engine 300, and a function of changing the sizes of these video data (D210 and D340) and/or moving their positions, and simultaneously outputting both the video data (D210 and D340) (as video data D352). More specifically, controller 352 can be formed by a digital video mixer, switcher, and the like.

Video output controller 352 in ENAV engine 300 is configured to output video data D210 from DVD-Video playback engine 200 (full video mode), to output video data D340 from ENAV engine 300 (full ENAV mode), or to mix and output both video data D210 from DVD-Video playback engine 200 and video data D340 from ENAV engine 300 (mixed frame mode) on the basis of a "video·audio output control signal" output from event generation·command/property processor 320 and/or a "layout control signal" output from ENAV interpreter 330.

Also, video output controller 352 has a function of: (1) selecting video output D210 of DVD-Video playback engine 200 as video data D352 of DVD-Video player 100 when video data D210 is output from only DVD-Video playback engine 200 but video data D340 of ENAV engine 300 is not output; (2) selecting video output D340 of ENAV engine 300 as video data D352 of DVD-Video player 100 when video data D340 is output from only ENAV engine 300 but video data D210 of DVD-Video playback engine 200 is not output; and (3) switching and selecting video output D210 of DVD-Video playback engine 200 and/or video output D340 of ENAV engine 300 in accordance with an output method of user's choice from the user operation unit.

Furthermore, controller 352 can start/end video output at the designated timing, can continue to output video data for only the designated duration, or can output video data from the designated position (e.g., a chapter number or time information) on the basis of the layout control signal.

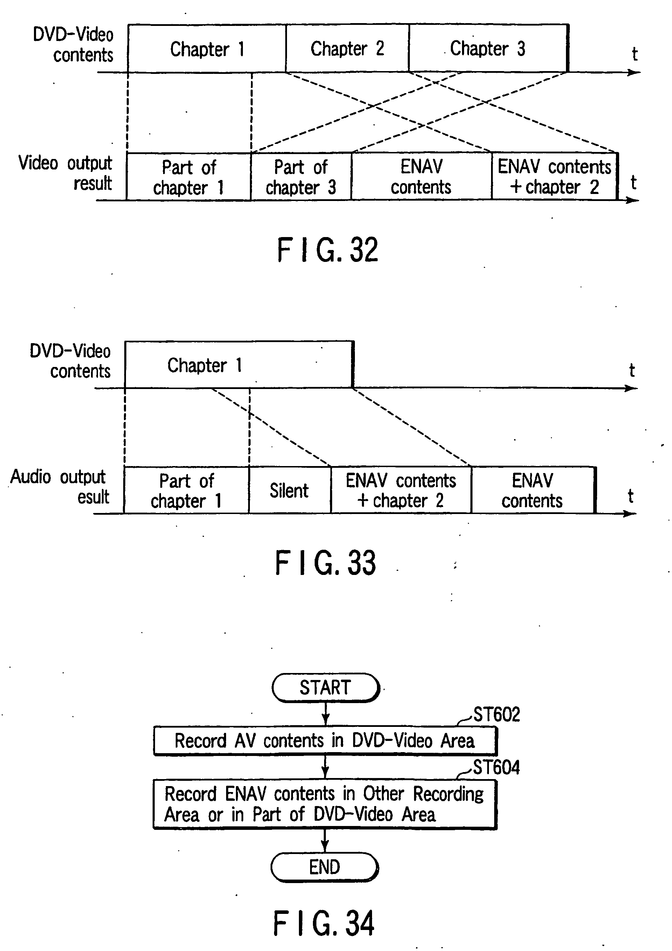

FIG. 32 shows an example wherein video data of the DVD-Video contents which include three chapters are output in accordance with the ENAV playback information of the ENAV contents on the basis of the layout control signal. In this example, a part of video data of chapter 1 is played back first, a part of video data of chapter 3 is played back, moving image data, still image data, and/or text data of the ENAV contents are/is played back, and video data of chapter 2, and moving image data and the like of the ENAV contents are mixed and played back finally.

Audio output controller 354 has a function of selecting audio data (audio part of D210) from DVD-Video playback engine 200 or audio data (audio part of D340) from ENAV engine 300, and a function of changing the tone volume levels of these audio data (D210 and D340) and/or mixing these data, and outputting mixed audio data of both the audio data (D210 and D340) (as audio data D354). More specifically, controller 354 can be formed by a digital audio mixer, switcher, and the like.

Audio output controller 354 in ENAV engine 300 is configured to output audio output D210 from DVD-Video playback engine 200, to output audio output D340 from ENAV engine 300, or to mix and output both audio data D210 from DVD-Video playback engine 200 and audio data D340 from ENAV engine 300 on the basis of a "video·audio output control signal" output from event generation·command/property processor 320 and/or a "layout control signal" output from ENAV interpreter 330. For example, when audio output controller 354 mixes and outputs both audio data D210 from DVD-Video playback engine 200 and audio data D340 from ENAV engine 300, it adjusts the levels of respective audio data (audio data part of D210 and that of D340), mixes these data, and outputs audio data D354.

Also, audio output controller 354 has a function of: (1) selecting audio output D210 of DVD-Video playback engine 200 as audio data D354 of DVD-Video player 100 when audio data D210 is output from only DVD-Video playback engine 200 but audio data D340 of ENAV engine 300 is not output; (2) selecting audio output D340 of ENAV engine 300 as audio data D354 of DVD-Video player 100 when audio data D340 is output from only ENAV engine 300 but audio data D210 of DVD-Video playback engine 200 is not output; and (3) switching and selecting audio output D210 of DVD-Video playback engine 200 and/or audio output D340 of ENAV engine 300 in accordance with an output method of user's choice from the user operation unit.

Furthermore, controller 354 can start/end audio output at the designated timing, can continue to output audio data for only the designated duration, or can output audio data from the designated position (e.g., a chapter number or time information) on the basis of the layout control signal.

FIG. 33 shows an example wherein audio data of the DVD-video contents which include one chapter is output in accordance with the ENAV playback information of the ENAV contents on the basis of the layout control signal. In this example, a part of audio data of chapter 1 is played back first, a part of audio data of chapter 1, and audio data of the ENAV contents are mixed and played back after a given silent period, and audio data of the ENAV contents is then played back.

Note that ENAV engine 300 in DVD-Video player 100 in FIG. 1 comprises interface 400 for sending the ENAV playback information in ENAV contents 30 read from DVD video disc 1 to ENAV interpreter 330, and interface 400* for sending data bodies (audio data, still image data, text data, moving image data, and the like) in read ENAV contents 30 to element decoder 340. These interfaces 400 and 400* form an interface (first interface) independently of an interface connection unit in FIG. 1.

DVD-video player 100 in FIG. 1 comprises interface 400W for receiving ENAV contents 30W from a communication line such as the Internet or the like, and sending ENAV playback information in received contents 30W to ENAV interpreter 330, and interface 400W* for sending data bodies (audio data, still image data, text data, moving image data, and the like) in received ENAV contents 30W to element decoder 340. These interfaces 400W and 400W* form the interface connection unit (second interface) of FIG. 1.

In order words, the building components of ENAV engine 300 in FIG. 1 can be summarized as follows. That is, ENAV engine 300 comprises
* language interpreter (ENAV interpreter) 330 for parsing and interpreting the contents of playback control information (ENAV playback information) contained in ENAV contents 30 (or 30W),
* information processor (event generation·command/property processor) 320 for executing a command (ENAV command) contained in the playback control information (ENAV playback information) that has been parsed and interpreted by ENAV interpreter 330,
* element decoder 340 for generating video·audio data D340 corresponding to other contents (audio data, still image data, text data, moving image data, and the like) contained in ENAV contents 30 (or 30W),
* output unit (video·audio output unit) 350 for mixing video·audio data D340 generated by element decoder 340 with video·audio data D210 played back by DVD-Video playback engine 200 and outputting the mixed data, or selecting one of video·audio data D210 and video·audio data D340 and outputting the selected data, on the basis of the execution result of the ENAV command in information processor 320, and
* user event controller 310 for generating a user event corresponding to user's operation 40 of the DVD-Video player.

Note that information processor 320 is configured to execute a process corresponding to the user event generated by user event controller 310 (e.g., ST92 to ST116 and the like in FIG. 14 to be described later). Output unit 350 is configured to mix video·audio data D340 generated by element decoder 340 with video·audio data D210 played back by DVD-Video playback engine 200 and output the mixed data, or to selectively output one of video·audio data D210 and video·audio data D340, on the basis of the execution result of the process corresponding to the user event.

FIGS. 2A-2C are views for explaining a display example upon outputting a playback video on the DVD-Video contents side and that on the ENAV contents side as a multi-frame output in the arrangement shown in FIG. 1.

Decoder unit 210 in DVD-Video playback engine 200 in FIG. 1 has a mechanism of decoding and outputting moving image information, audio information, sub-picture information, and the like in DVD-Video contents 1 from DVD video disc 1 as in a decoder unit in the conventional DVD-Video player. FIG. 2A exemplifies a moving image and/or sub-picture part (D210) in DVD-Video contents 10.

Element decoder 340 in ENAV engine 300 has a function of decoding and outputting moving image information (including animation), still image information, audio information, and text information in ENAV contents 30 recorded on DVD video disc 1 in FIG. 30 (or FIG. 31) and/or ENAV contents (Web contents) 30W acquired from the Internet or the like. FIG. 2B exemplifies a plurality of moving image and/or still image parts 30A to 30C (D340) contained in ENAV contents 30 (or 30W).

When DVD-Video contents image 10 in FIG. 2A and ENAV contents images 30A to 30C in FIG. 2B are to be mixed and output, video output controller 352 in FIG. 1 receives a layout control signal from ENAV interpreter 330, and adjusts (reduces in this case) the window size of DVD-Video contents 10 on the basis of the received layout control signal. More specifically, pixels of DVD-Video contents 10 in FIG. 2A can be decimated to fall within the vertical and horizontal pixel sizes of a blank area (an area where none of ENAV contents images 30A to 30C are displayed) in FIG. 2B.

When video output controller 352 executes an operation for fitting (video-mixing) contents 10 obtained after the window size of DVD-Video contents 10 has been adjusted (reduced) into the blank area in FIG. 2B, multi-frame video output D352 that mixes the DVD video contents playback image and ENAV contents playback images is obtained, as shown in FIG. 2C.

FIGS. 3A-3C are views for explaining a display example upon outputting a playback video on the DVD-Video contents side and that on the ENAV contents side on multi-windows (overlapping windows) in the arrangement shown in FIG. 1.

A method of outputting both video data D210 from DVD-Video playback engine 200 and video data D340 from ENAV engine 300 is not limited to the above method that adjusts the respective image sizes and outputs these video data onto split frame areas as a multi-frame output, as shown in FIG. 2C, in accordance with the description of the ENAV playback information in ENAV contents.30 (or 30W). That is, the sizes of images of DVD-Video contents 10 (FIG. 3A) and ENAV contents 30 (FIG. 3B) may be adjusted in accordance with the description of the ENAV playback information, and the size-adjusted contents images 10 and 30 may be output on overlapping windows (multi-windows), as shown in FIG. 3C. Display of such overlapping windows (multi-windows) can be implemented by exploiting the state-of-the-art technique in a personal computer.

FIGS. 4A-4E are views for explaining an example upon mixing a playback audio on the DVD-Video contents side and that on the ENAV contents side in the arrangement shown in FIG. 1.

Assume that audio output D210 from DVD-Video playback engine 200 has an analog waveform shown in FIG. 4A, and audio output D340 has an analog waveform shown in FIG. 4C. In this case, since the tone volume level of DVD-Video audio data D210 is different from that of ENAV audio data D340, audio data with a smaller tone volume level can hardly be caught if these data are mixed intact. For this reason, audio output controller 354 in FIG. 1 executes tone volume level adjustment, so that the average tone volume level of DVD-Video audio data D210 becomes equivalent to that of ENAV audio data D340 (level adjustment of digital data can be attained by shifting the bits of audio data; that of analog data can be attained using a known automatic volume adjustment circuit in an analog tape recorder or the like).

As a result of the tone volume level adjustment, audio output D210 in FIG. 4A is adjusted, as shown in FIG. 4B, and audio output D340 in FIG. 4C is adjusted, as shown in FIG. 4D. When the DVD-video playback audio data (FIG. 4B) and ENAV contents playback audio data (FIG. 4D) that have undergone the tone volume level adjustment are mixed, audio output D354 with a waveform shown in FIG. 4E is obtained.

As the effect of the example of FIG. 4, if one (e.g., D210) of audio data to be mixed is declamation or the like without music, the other audio data (D340) can be used as background music (BGM).

Note that the tone volume level of DVD-Video playback audio data D210 in FIG. 4A can be adjusted by multiplying predetermined attenuation coefficient ATT-1 (= 0 to 1), and that of ENAV contents playback audio data D340 in FIG. 4C can be adjusted by multiplying predetermined attenuation coefficient ATT-2 (= 0 to 1). Attenuation coefficient ATT-1 and/or attenuation coefficient ATT-2 can be given as variables of a "tone volume change command" specified in the ENAV playback information.

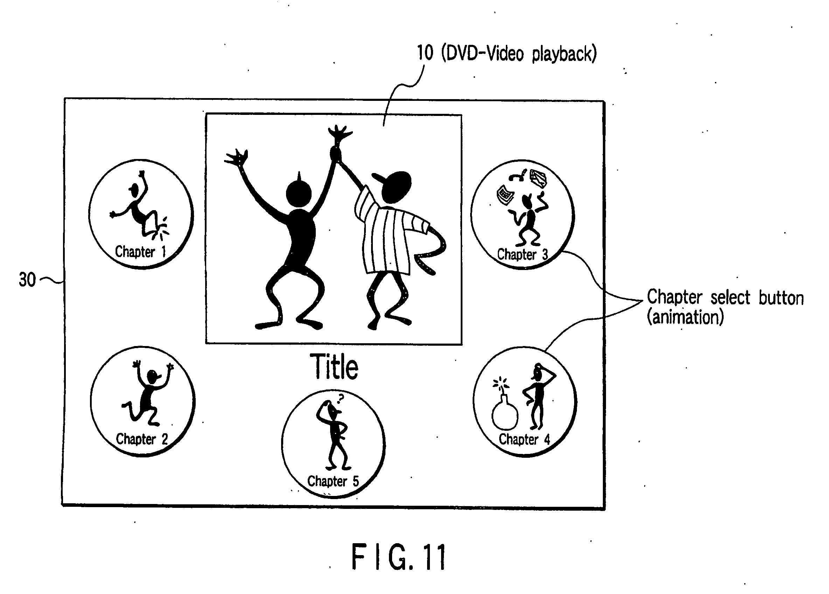

FIG. 5 is a view for.explaining an example of changes in DVD video playback output (DVD video menu) and ENAV playback output (ENAV menu) in correspondence with an internal command. FIG. 6 is a flow chart for explaining an example of a processes of the DVD-Video playback engine and ENAV engine in association with menu call by a command. FIG. 7 is a view for explaining a menu display example (full video mode) on the video contents side. FIG. 8 is a view for explaining a menu display example (full ENAV mode) on the ENAV contents side. FIG. 11 is a view for explaining a display example (mixed frame mode (mixed mode)) of a mixed menu of the video and ENAV contents.

Assume that execution of menu call is set as a post-command at the end of a given title (e.g., VTS#1 in FIG. 30 or 31) contained in DVD-Video contents 10. In this case, DVD-Video playback engine 200 executes menu call at the end of playback of that title, and outputs a DVD event signal indicating that menu call will be executed (or menu call was executed) to ENAV engine 300. At this time, upon receiving the DVD event signal sent from DVD-Video playback engine 200, ENAV engine 300 in a wait state executes an ENAV engine operation in accordance with the ENAV playback information in ENAV contents 30.

The aforementioned ENAV playback information describes ENAV contents (ENAV menu) to be executed upon receiving the DVD event signal that means menu call execution, and switching of a mode (full frame mode/full video mode, full ENAV mode, or mixed frame mode) at that time.

An example of an operation associated with menu call (by an internal command of the DVD-Video player) in DVD-Video player 100 in FIG. 1 will be described in detail below with reference to FIGS. 5 to 8, and FIG. 11. A case will be exemplified below wherein menu call is executed by an internal command (pre-command, post-command, or the like) of player 100.

On the DVD-Video playback engine 200 side, a given title is played back (step ST10, NO in step ST12; corresponding to "DVD-Video playback" in the uppermost column of FIG. 5). Upon completion of title playback (YES in step ST12), menu call is executed by a post-command (internal command of player 100) (step ST14; corresponding to "downward arrow" of the uppermost column of FIG. 5). Then, DVD-Video playback controller 220 sends a DVD event signal indicating menu call to event generation·command/property processor 320 (step ST16), and video output controller 352 sends menu video data D352 to a TV monitor (not shown). Then, a menu shown in, e.g., FIG. 7 is displayed on the display screen of the TV monitor (step ST18; corresponding to "DVD-Video menu display" in the uppermost column of FIG. 5).

On the ENAV engine 300 side, after ENAV interpreter 330 fetches ENAV contents 30 (step ST20), and is ready to exchange command/event/property with event generation·command/property processor 320, it waits for some event (step ST22, NO in step ST24; corresponding to "event wait" in the second column of FIG. 5). If the "DVD event signal indicating menu call" is output in step ST16, and event generation·command/property processor 320 receives this DVD event signal (YES in step ST24; corresponding to "downward arrow" of the second column of FIG. 5), ENAV interpreter 330 checks if fetched ENAV contents 30 include ENAV menu contents.

If ENAV contents 30 do no include any ENAV menu contents (NO in step ST26), event generation·command/property processor 320 outputs a video·audio output control signal as a "full video mode that means output of video and audio data of the DVD-Video playback engine" (step ST28). Then, video·audio output unit 350 outputs video·audio data of DVD-Video playback engine 200 as a video·audio output (D352, D354). ENAV engine 300 returns to an event wait state (step ST30).

On the other hand, if ENAV contents 30 include ENAV menu contents (YES in step ST26), event generation·command/property processor 320 executes an ENAV menu process in accordance with an ENAV command from ENAV interpreter 330 (step ST32). At this time, event generation·command/property processor 320 outputs a video·audio output control signal as a "full ENAV mode that means output of video and audio data of the ENAV engine" (step ST34). Then, video·audio output unit 350 outputs video (ENAV menu)·audio data of ENAV engine 300 as a video·audio output (D352, D354).

The ENAV menu in ENAV contents 30 is defined by moving image data (including animation), still image data, audio data, and text data, as shown in, e.g., FIG. 8. These data are sent to and decoded by the corresponding decoder in element decoder 340. The decoded data are sent as video data D352 to a monitor TV (not shown) and are displayed as the ENAV menu on the display screen of the monitor TV (step ST36; corresponding to "ENAV menu display" in the second column of FIG. 5). ENAV engine 300 then returns to a wait state (step ST30).

When DVD-Video playback engine 200 outputs DVD-Video menu data D210, and ENAV engine 300 outputs' ENAV menu data D340, ENAV engine 300 can select one of the following two processes in accordance with device setups, user's operation, ENAV playback information, and the like (see lower two columns in FIG. 5) upon switching a video output in accordance with the video·audio output control signal from event generation·command/property processor 320 (corresponding to "downward arrow" in the third column of FIG. 5) :
(1) ENAV menu display in full ENAV mode from DVD-Video playback in full video mode; and
(2) DVD-Video menu display in full video mode from DVD-Video playback in full video mode.

Also, when DVD-Video playback engine 200 outputs DVD-Video menu data D210, and ENAV engine 300 outputs ENAV menu data D340, a menu defined by both DVD-Video contents (moving image or the like) 10 and ENAV contents (moving image or the like) 30 may be displayed in the mixed frame mode in the processes in steps ST32 to ST36. FIG. 11 shows a display example in this case.

Although the DVD-Video menu (FIG. 7) can display only one moving image, the ENAV menu (FIG. 8) can use moving images (including animation) for respective menu windows and select buttons. Furthermore, using video output D210 of DVD-Video playback engine 200 and video output D340 of ENAV engine 300, the ENAV menu (FIG. 11) which contains not only the moving image of DVD-Video contents 10 but also those of the ENAV contents can be displayed.

The process in FIG. 6 can be summarized as follows. That is, in a system for playing back recorded contents that include DVD-Video contents 10 and ENAV contents 30 from a DVD video disc (1 in FIG. 30 or 31) having a volume space complying with the DVD-Video standard, DVD-Video contents 10 of the recorded contents played back from DVD video disc 1 are acquired (step ST10). Then, ENAV contents 30 of the recorded contents played back from DVD video disc 1 are acquired (step ST20), and the contents of acquired ENAV contents 30 are executed in accordance with a predetermined event (step ST16) corresponding to the contents of acquired DVD-Video contents 10 (step ST32).

Modes (a video mode that uses the DVD-Video contents and/or an interactive mode using the ENAV contents) and display modes used in the system arrangement of FIG. 1 will be explained below. The display mode in the video mode includes only the full video mode (FIG. 7 and the like), but the display mode in the interactive mode includes three different modes, i.e., the full video mode (FIG. 7 and the like), full ENAV mode (FIG. 8 and the like), and mixed frame mode (FIG. 11 and the like). For example, these display modes can be selectively used as follows.

That is, when DVD-Video playback alone is purely done in the video mode, the full video mode is used.

On the other hand, in the interactive mode, when only DVD-Video is displayed (but the ENAV engine is running as its background), the full video mode is used. Also, when the ENAV contents are displayed (but DVD-Video playback is done as its background), full ENAV mode (full navigation mode) is used. Furthermore, when DVD-Video playback is made while the ENAV engine is running, and when a DVD-Video playback image and ENAV contents playback image are displayed together, the mixed frame mode (mixed mode) is used.

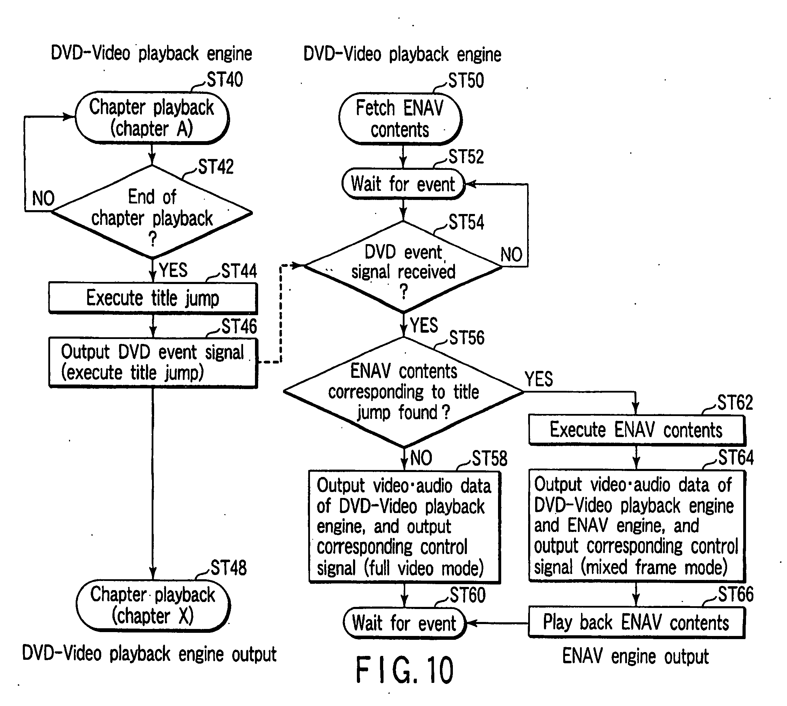

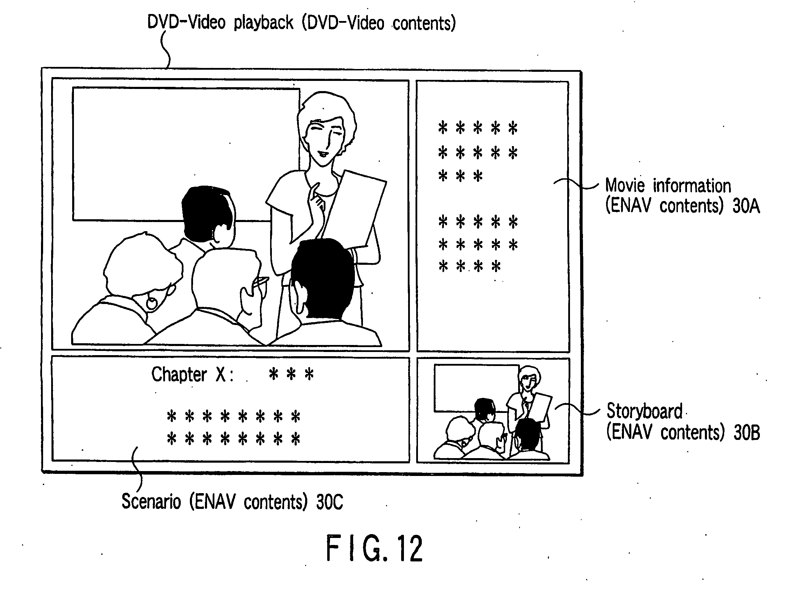

FIG. 9 is a view for explaining an example of changes in DVD video playback output (DVD video chapter playback) and ENAV playback output (ENAV contents playback) in correspondence with an internal command. FIG. 10 is a flow chart for explaining an example of the processes of the DVD-Video playback engine and ENAV engine in association with chapter playback. FIG. 12 is a view for explaining a display example (mixed frame mode) of a mixed video of the video and ENAV contents.

Assume that execution of title jump is set as a post-command at the end of chapter A (e.g., given part of title PTT contained in one of VTS#1 to VTS#n in FIG. 30 or 31 is assumed to be this chapter A) of DVD-Video contents 10. In this case, DVD-Video playback engine 200 executes title jump to another chapter X upon completion of playback of chapter A, and outputs a DVD event signal indicating that title jump will be executed (or title jump was executed) to ENAV engine 300. Upon receiving the DVD event signal sent from DVD-Video playback engine 200, ENAV engine 300 in a wait state executes an ENAV engine operation in accordance with the ENAV playback information in ENAV contents 30.

The ENAV playback information describes ENAV contents to be executed upon receiving the DVD event signal that means title jump execution, and switching of a mode (full frame mode/full video mode, full ENAV mode,; or mixed frame mode) at that time.

An example of the operation associated with title jump/chapter switching (by an internal command of the DVD-Video player) in DVD-Video player 100 in FIG. 1 will be described in detail below with reference to FIGS. 9 to 12. A case will be exemplified below wherein title jump is executed by an internal command (pre-command, post-command, or the like) of player 100.

On the DVD-Video playback engine 200 side, chapter A in a given title is played back (step ST40, NO in step ST42; corresponding to "DVD-Video playback (chapter A)" in the uppermost column of FIG. 9). Upon completion of playback of chapter A of that title (YES in step ST42), title jump is executed by a post-command (internal command of player 100) (step ST44; corresponding to "downward arrow" of the uppermost column of FIG. 9). Then, DVD-Video playback controller 220 sends a DVD event signal indicating title jump to event generation·command/ property processor 320 (step ST46), and video output controller 352 sends video data D352 of chapter X of a jump destination title to a TV monitor (not shown). Then, a video of that chapter X is displayed on the display screen of the TV monitor (step ST48; corresponding to "DVD-Video playback (chapter X)" in the uppermost column of FIG. 9).

On the ENAV engine 300 side, after ENAV interpreter 330 fetches ENAV contents 30 (step ST50), and is ready to exchange command/event/property with event generation·command/property processor 320, it waits for some event (step ST52, NO in step ST54; corresponding to "event wait" in the second column of FIG. 9). If the "DVD event signal indicating title jump" is output in step ST46, and event generation·command/property processor 320 receives this DVD event signal (YES in step ST54; corresponding to "downward arrow" of the second column of FIG. 9), ENAV interpreter 330 checks if fetched ENAV contents 30 include ENAV menu contents.

If ENAV contents 30 do no include any contents corresponding to "title jump" (NO in step ST56), event generation·command/property processor 320 outputs a video·audio output control signal as a "full video mode that means output of video and audio data of the DVD-Video playback engine" (step ST58). Then, video·audio output unit 350 outputs video·audio data of chapter X from DVD-Video playback engine 200 as a video·audio output (D352, D354). ENAV engine 300 returns to an event wait state (step ST60).

On the other hand, if ENAV contents 30 include contents corresponding to "title jump" (YES in step ST56), event generation·command/property processor 320 executes a process of the contents corresponding to "title jump" (e.g., a process for displaying, if chapter X is a given scene of drama, scenario text of that scene) in accordance with an ENAV command from ENAV interpreter 330 (step ST62). At this time, event generation·command/ property processor 320 outputs a video·audio output control signal as a "full ENAV mode that means output of video and audio data of the ENAV engine" (step ST64). Then, video·audio output unit 350 outputs video (scenario text or the like in the above example)·audio (e.g., the audible comment of a director or scenario writer who produced that drama) data of ENAV engine 300 as a video·audio output (D352, D354).

Respective data in ENAV contents 30 include video information (text, still image, moving image, or animation) 30A, storyboard (still image) 30B, scenario (text) 30C, and other data (audio data and the like), as shown in, e.g., FIG. 12. These data are sent to and decoded by the corresponding decoders in element decoder 340. The decoded data are sent as video data D352 to a monitor TV (not shown) and are displayed as ENAV contents 30A to 30C on the display screen of the monitor TV (step ST66; corresponding to "ENAV contents playback" in the second column of FIG. 9). ENAV engine 300 then returns to a wait state (step ST60).

When DVD-Video playback engine 200 outputs DVD-Video chapter X playback data D210, and ENAV engine 300 outputs ENAV contents playback data D340, ENAV engine 300 can select one of the following two processes in accordance with device setups, user's operation, ENAV playback information, and the like (see lower two columns in FIG. 9) upon switching a video output in accordance with the video·audio output control signal from event generation·command/property processor 320 (corresponding to "downward arrow" in the third column of FIG. 9):
(1) ENAV contents playback in full ENAV mode from DVD-Video (chapter A) playback in full video mode; and
(2) DVD-Video. (chapter X) playback in full video mode from DVD-Video (chapter A) playback in full video mode.

Also, when DVD-Video playback engine 200 outputs DVD-Video (chapter X) playback data D210, and ENAV engine 300 outputs ENAV contents playback data D340 (corresponding to chapter X), a display frame defined by both DVD-Video contents (moving image or the like) 10 and ENAV contents (moving image or the like) 30 may be displayed in the mixed frame mode in the processes in steps ST62 to ST66. FIG. 12 shows a display example in this case. In FIG. 12, a DVD-Video playback image (one scene of a movie or drama, or the like) is displayed at a position corresponding to DVD-Video contents 10 in FIG. 2C, and movie information 30A, storyboard 30B, and scenario 30C are displayed as various ENAV contents at positions corresponding to ENAV contents 30A to 30C in FIG. 2C.

Upon display in the mixed frame mode in FIG. 12 (mixed mode), a scenario, storyboard, information of a movie, information of the casts, and the like are switched and displayed in synchronism (or connection or combination) with a change in contents (change in scene) of DVD-Video contents 10, while playing back a scene of a movie or drama as DVD-Video contents 10. These pieces of information (information of the scenario and the like to be displayed in synchronism, connection, or combination with the playback video of DVD-Video) can use not only ENAV contents 30 recorded on DVD video disc 1 but also ENAV contents 30W externally acquired using the Internet or the like.

That is, the ENAV contents, which can variously change in combination, connection, or synchronism with the contents playback of DVD video disc 1, are not limited to ENAV contents 30 played back from that disc 1, but can use ENAV contents (Web contents) 30W acquired from an external system (Internet or the like). Furthermore, the playback method of DVD-Video contents 10 can be diversified by using ENAV contents 30 from disc 1 and/or ENAV contents 30W acquired from the external system together as needed.

If the menu process in FIG. 6 is combined with the title jump process in FIG. 10, a DVD-video/ENAV mixed menu shown in FIG. 11 can be displayed on a portion (e.g., a display area of video contents 10A) of the display area in FIG. 12, in step ST64 in FIG. 10.

ENAV contents 30 corresponding to title jump that has been explained with reference to FIG. 10 can be formed of moving image (including animation) data, still image data, audio data, and text data. These data are sent to and decoded by the corresponding decoders of element decoder 340. The decoded contents are then displayed as ENAV contents on the display screen of the TV monitor (not shown).

At this time, if the ENAV playback information in ENAV contents 30 contains a description which instructs to form a frame using, e.g., DVD-Video contents 10 and ENAV contents 30, event generation-command/property processor 320 outputs a video-audio output control signal as the mixed frame mode to video-audio output unit 350. Then, video and audio output controllers 352 and 354 output video data D352 and audio data D354 obtained by mixing video·audio data D210 from DVD-Video playback engine 200, and video·audio data D340 from ENAV engine 300. In this case, video output controller 352 adjusts the sizes/positions of frames of video data D210 and D340 and outputs these data as a multi-frame output (FIG. 2C or FIG. 12) or outputs them on multi-windows (FIG. 3C) in accordance with the ENAV playback information in ENAV contents 30. Also, audio output controller 354 appropriately mixes and outputs audio data D210 and D340 after it adjusts their levels.

The process in FIG. 10 can be summarized as follows. That is, in a system for playing back recorded contents that include DVD-Video contents 10 and ENAV contents 30 from a DVD video disc (1 in FIG. 30 or 31) having a volume space complying with the DVD-Video standard, DVD-Video contents 10 of the recorded contents played back from DVD video disc 1 are acquired (step ST40). Then, ENAV contents 30 of the recorded contents played back from DVD video disc 1 are acquired (step ST50), and the contents of acquired ENAV contents 30 are executed in accordance with a predetermined event (step ST46) corresponding to the contents of acquired DVD-Video contents 10 (step ST62).

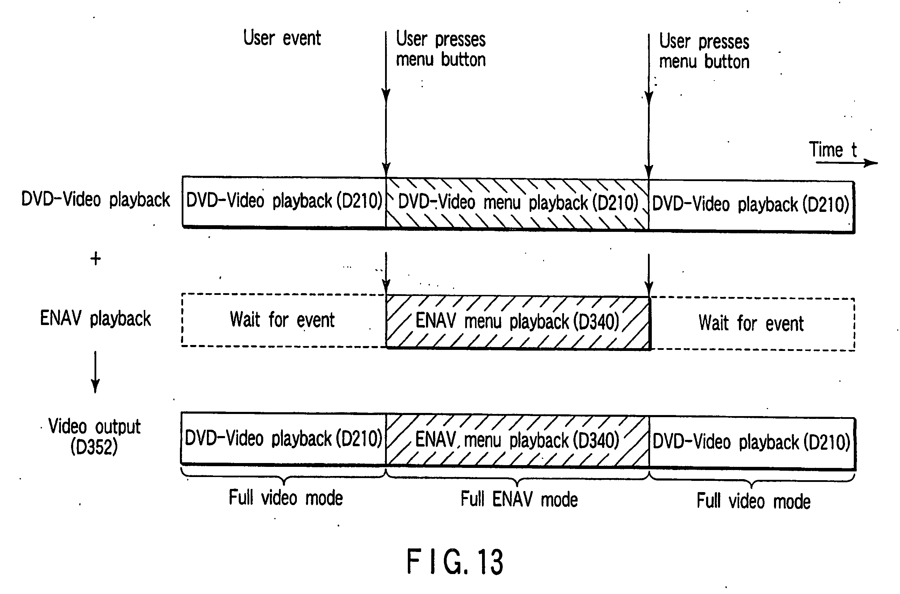

FIG. 13 is a view for explaining an example of changes in DVD video playback output (DVD video menu) and ENAV playback output (ENAV menu) in correspondence with user's operation (user event). FIG. 14 is a flow chart for explaining an example of the processes of the DVD-Video playback engine and ENAV engine in association with menu call by the user.

The operation associated with menu call (issued in response to a user's request) in DVD-Video player 100 in FIG. 1 will be explained below with reference to FIGS. 13 and 14. In this embodiment, a processing example executed when the user of DVD-Video player 100 in FIG. 1 presses a menu button on a remote controller (not shown) or a front panel (not shown) of DVD-Video player 100 to display a menu, and presses the menu button again to execute resume playback (when the menu button has been pressed during playback of DVD video disc 1, video playback is paused, and playback automatically restarts from the playback paused position upon completion of a menu operation) will be explained.

On the DVD-Video playback engine 200 side, a title of a given movie is played back (step ST70; NO in step ST72; corresponding to "first DVD-Video playback" in the uppermost and third columns in FIG. 13). When the user issues menu call during title playback, that user event signal (A) is sent to DVD-Video playback controller 220 (YES in step ST72; corresponding to "first downward arrow" of the uppermost column in FIG. 13). Then, DVD-video playback controller 220 temporarily stores information of the playback time (or address) of the title playback position paused by this menu call, and then executes a process corresponding to menu call (step ST74). As a result, a DVD-Video menu (not shown) that contains an audio select button and caption language select button is displayed on the screen of a monitor TV (not shown) (step ST76; corresponding to "DVD-Video menu playback" in the uppermost column of FIG. 13). This menu display continues (NO in step ST78) until the user makes the next operation (selection of audio/caption, selection of a title play button, or the like).

Assume that the user has selected, e.g., an English audio and Japanese caption from the displayed menu, and pressed the menu button on the remote controller (or the title-play button in the displayed menu). Then, user event signal (A) corresponding to this user's operation is sent to DVD-Video playback controller 220 (YES in step ST78; corresponding to "second downward arrow" of the uppermost column of FIG. 13). DVD-Video playback controller 220 executes a resume process on the basis of the temporarily stored playback time information (or time information) in response to this user event (step ST80). As a result, playback of DVD video disc 1 is automatically restarted from a scene immediately before menu call of the title that has been paused so far (step ST82; corresponding to"second DVD-Video playback" in the uppermost and third columns of FIG. 13).

On the ENAV engine 300 side, after ENAV interpreter 330 fetches ENAV contents 30, and is ready to exchange command/event/property with event generation·command/ property processor 320, it waits for some event (step ST92, NO in step ST94; corresponding to "first event wait" in the second column of FIG. 13).

If the user has pressed the menu button on the nearby remote controller (not shown) (YES in step ST94; corresponding to "first downward arrow" of the second column of FIG. 13), user event controller 310 outputs user event signals (A) and (C) of menu call (step ST96). DVD-Video playback controller 220 receives user event signal (A) of menu call (YES in step ST72), and event generation·command/property processor 320 receives user event signal (C) of menu call.

If ENAV contents 30 (and/or 30W) that have been fetched before step ST92 do not contain any ENAV menu (NO in step ST98), event generation·command/property processor 320 outputs a video·audio output control signal as a "full video mode that means output of video and audio data of the DVD-Video playback engine" (step ST100). Then, video·audio output unit 350 outputs video·audio data of DVD-Video playback engine 200 as a video·audio output (D352, D354). ENAV engine 300 returns to an event wait state (step ST102).

On the other hand, if ENAV contents 30 (and/or 30W) include ENAV menu contents (YES in step ST98), event generation·command/property processor 320 executes a process of the ENAV menu in accordance with an ENAV command from ENAV interpreter 330 (step ST104). At this time, event generation·command/property processor 320 outputs a video·audio output control signal as a "full ENAV mode that means output of video and audio data of the ENAV engine" (step ST106). Then, video·audio output unit 350 outputs video (ENAV menu)·audio data of ENAV engine 300 as a video·audio output (D352, D354).

The ENAV menu in ENAV contents 30 (and/or 30W) is defined by moving image data (including animation), still image data, audio data, and text data, as shown in, e.g., FIG. 8. These data are sent to and decoded by the corresponding decoder in element decoder 340. The decoded data are sent as video data D352 to a monitor TV (not shown) and are displayed as a menu on the display screen of the monitor TV (step ST108; corresponding to "ENAV menu playback" in the second and third columns of FIG. 13). ENAV engine 300 then returns to a wait state (step ST102). In this state, ENAV engine 300 waits for the next event (user's remote-controller operation or the like in this case) (NO in step ST110; corresponding to "second event wait" in the second column of FIG. 13).

If the user has pressed the menu button of the nearby remote controller (not shown) (YES in step ST110; corresponding to "second downward arrow" of the second column of FIG. 13), user event controller 310 outputs user event signals (A) and (C) of resume (step ST112). DVD-Video playback controller 220 receives user event signal (A) of resume (YES in step ST78), and event generation·command/property processor 320 receives user event signal (C) of resume.

Then, event generation·command/property processor 320 outputs a video·audio output control signal as a "full video mode that means output of video and audio data of the DVD-Video playback engine" (step ST114). Then, video·audio output unit 350 outputs video·audio data of DVD-Video playback engine 200 as a video·audio output (D352, D354) (step ST82; this process corresponds to "second DVD-Video playback" in the third column of FIG. 13).

The process in FIG. 14 can be summarized as follows. That is, when the user has pressed the menu button on the user operation unit (a remote controller or front panel of DVD-Video player 100; not shown) (YES in step ST94) during title playback of DVD-Video contents 10 (step ST70), user event controller 310 in ENAV engine 300 receives this menu button operation signal (YES in step ST72). User event controller 310 outputs this signal as user event signal (A) to DVD-Video playback controller 220 and as user event signal (C) to event generation·command/property processor 320 (step ST96).

DVD-Video playback engine 200 receives user event signal (A) that means menu call, and plays back a DVD-Video menu (step ST76).

Upon receiving user event signal (C) that means menu call (step ST96), ENAV engine 300 in the wait state (step ST92) executes an operation in accordance with the playback control information (markups, scripts) in ENAV contents 30 (and/or 30W). This playback control information describes, e.g., "ENAV contents (ENAV menu)" to be executed upon receiving user event signal (C) that means execution of menu call, and "switching of modes (full frame mode/full ENAV mode or mixed frame mode)" at that time.

The ENAV menu in ENAV contents 30 (and/or 30W) is defined by moving image data (including animation), still image data, audio data, and text data. These data are sent to and decoded by the corresponding decoder in element decoder 340, and are displayed as an ENAV menu (step ST108). At this time, event generation·command/property processor 320 outputs a video·audio control signal as a full ENAV mode that means output of video·audio data of the ENAV engine. In response to this signal, video·audio output unit 350 outputs video·audio data (D340) of ENAV engine 300 as a video·audio output (D352, D354). If ENAV contents 30 (and/or 30W) does not include any ENAV menu contents (NO in step ST98), event generation·command/property processor 320 outputs a video·audio output control signal as a full video mode that means output of video and audio data of the DVD-Video playback engine. Then, video·audio output unit 350 outputs video·audio data (D210) of DVD-Video playback engine 200 as a video·audio output (D352, D354). ENAV engine 300 returns to an event wait state again (step ST102).

If the user has pressed the menu button of the user operation unit (a remote controller or front panel of DVD-Video player 100; not shown) (YES in step ST110) during menu playback (step ST76, ST108; the DVD-Video menu is displayed in the full video mode, or the ENAV menu is displayed in the full ENAV mode), user event controller 310 of ENAV engine 300 receives this signal. User event controller 310 outputs this signal as user event signal (A) to DVD-Video playback controller 220, and as user event signal (C) to event generation·command/property processor 320 (step ST112).

As a result, DVD-Video playback engine 200 receives user event signal (A) that means resume, and resumes playback of the DVD-Video title that was played back previously (steps ST80 to ST82).

Upon receiving user event signal (C) that means resume, in ENAV engine 300 which is playing back the ENAV menu, event generation-command/property processor 320 outputs a video-audio output control signal as a full video mode in accordance with the playback control information (markups, scripts) in ENAV contents 30 (and/or 30W), and video·audio output unit 350 outputs video·audio data (D210) of DVD-Video playback engine 200 as a video·audio output (step ST114). At this time, ENAV engine 300 itself returns to a wait state (step ST116). That is, DVD-Video player 100 which has displayed the ENAV menu resumes playback of the DVD-Video title (resume).

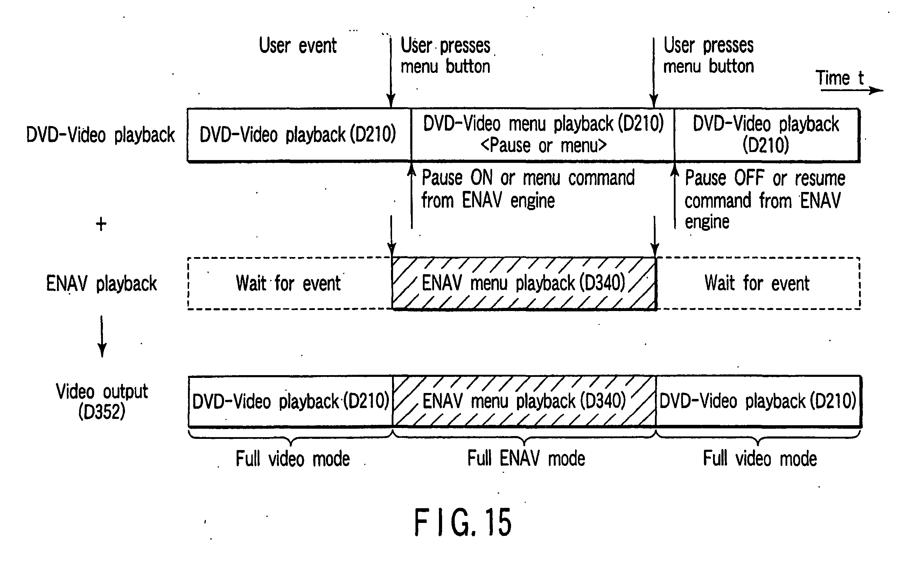

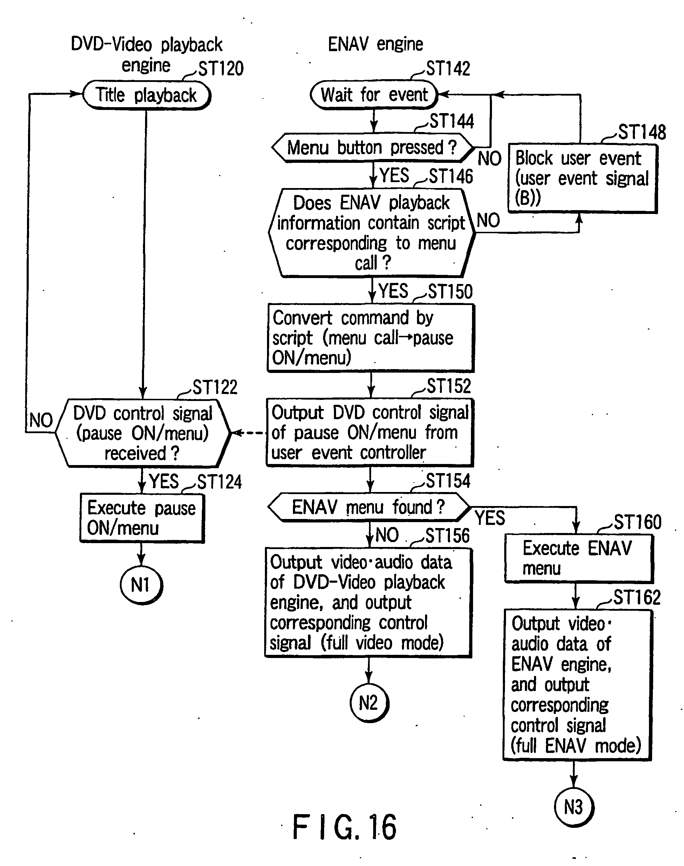

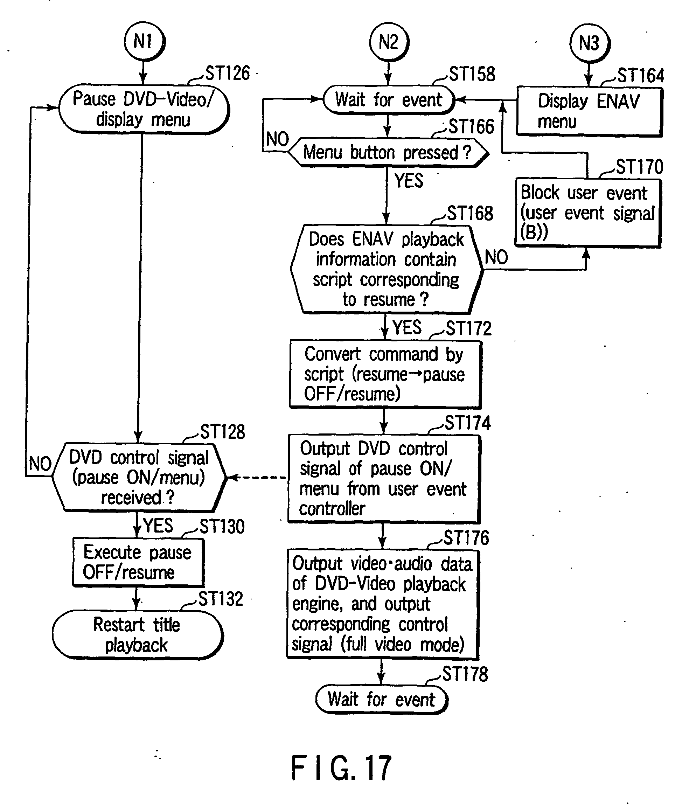

FIG. 15 is a view for explaining an example of changes in DVD video playback output (DVD video menu or playback pause) and ENAV playback output (ENAV menu) in correspondence with user's operation (user event). FIGS. 16 and 17 are flow charts for explaining an example of the processes of the DVD-Video playback engine and ENAV engine in association with menu call or playback pause by the user.

Another example of the operation associated with menu call (issued in response to a user's request) in DVD-Video player 100 in FIG. 1 will be explained below with reference to FIGS. 15 to 17. In this embodiment, a processing example executed when the user of DVD-Video player 100 presses a menu button on a remote controller (not shown) or a front panel (not shown) of DVD-Video player 100 to display a menu, and presses the menu button again to restart playback (when the menu button has been pressed during playback of DVD video disc 1, video playback is paused, and playback automatically restarts from the playback paused position upon completion of a menu operation) will be explained.

On the DVD-Video playback engine 200 side, a title of a given movie is played back (step ST120, NO in step ST122 in FIG. 16; corresponding to "first DVD-Video playback" in the uppermost and third columns in FIG. 15). When the user has made menu call operation during title playback, a DVD control signal corresponding to that operation is sent from ENAV engine 300 to DVD-Video playback controller 220 (YES in step ST122; corresponding to "first downward arrow" of the uppermost column in FIG. 15). Then, DVD-video playback controller 220 pauses title playback in response to this DVD control signal that means menu call or pause ON, and then executes a process corresponding to menu call or pause ON (step ST124). As a result, a DVD-Video menu (not shown) is displayed on the screen of a monitor TV (not shown) or a still image at the moment of pausing playback is displayed on the screen (step ST126 in FIG. 17; corresponding to "DVD-Video menu playback <pause or menu>" in the uppermost column of FIG. 15). This menu display or still playback continues (NO in step ST128) until the user makes the next operation (menu button operation, pause button operation, or the like).

If the user has pressed the menu button on the remote controller (not shown), a DVD control signal corresponding to this user operation is sent from ENAV engine 300 to DVD-Video playback controller 220 (YES in step ST128; corresponding to "second downward arrow" of the uppermost column of FIG. 15). Then, DVD-Video playback controller 220 cancels the paused state (paused playback) or executes the aforementioned resume process (FIG. 14) (step ST130) on the basis of the DVD control signal (which means resume if menu display is executed in step ST124 or means pause OFF if pause ON is executed in step ST124) corresponding to this user event. As a result, playback of DVD video disc 1 is automatically restarted from a scene corresponding to the paused playback position (step ST132; corresponding to "second DVD-Video playback" in the uppermost and third columns of FIG. 15).

On the ENAV engine 300 side, after ENAV interpreter 330 fetches ENAV contents 30, and is ready to exchange command/event/property with event generation·command/property processor 320, it waits for some event (step ST142, NO in step ST144 in FIG. 16; corresponding to "first event wait" in the second column of FIG. 15).

If the user has pressed the menu button on the nearby remote controller (not shown) (YES in step ST144; corresponding to "first downward arrow" of the second column of FIG. 15), ENAV interpreter 330 checks if the ENAV playback information in ENAV contents 30 (and/or 30W) contains a script corresponding to menu call (step ST146). If the ENAV playback information does not contain any script corresponding to menu call (NO in step ST146), ENAV interpreter 330 sends a message indicating this to event generation·command/property processor 320. In response to this message, event generation·command/property processor 320 also sends that message to user event controller 310. Then, user event controller 310 outputs user event signal (B) that blocks (deters) the user event at that time (when the ENAV playback information does not contain any script corresponding to menu call) (signal "X" output from user vent controller 310 in FIG. 1; step ST148), and returns to an event wait state.

On the other hand, if the ENAV playback information in ENAV contents 30 (and/or 30W) contains a script corresponding to menu call (YES in step ST146), event generation·command/property processor 320 converts an ENAV command (menu call corresponding command in the ENAV playback information) received from ENAV interpreter 330 into a DVD control signal that instructs shift from menu call to pause ON/menu display (step ST150). The DVD control signal for "pause ON/menu" is output from event generation·command/property processor 320 to DVD-Video playback controller 220 (step ST152).

If ENAV contents 30 (and/or 30W) that have been fetched before step ST142 do not contain any ENAV menu (NO in step ST154), event generation·command/property processor 320 outputs a video·audio output control signal as a "full video mode that means output of video and audio data of the DVD-Video playback engine" (step ST156). Then, video·audio output unit 350 outputs video·audio data of DVD-Video playback engine 200 as a video·audio output (D352, D354). ENAV engine 300 returns to an event wait state (step ST158 in FIG. 17).

On the other hand, if ENAV contents 30 (and/or 30W) include ENAV menu contents (YES in step ST154 in FIG. 16), event generation·command/property processor 320 executes a process of the ENAV menu in accordance with an ENAV command from ENAV interpreter 330 (step ST160). At this time, event generation·command/property processor 320 outputs a video·audio output control signal as a "full ENAV mode that means output of video and audio data of the ENAV engine" (step ST162). Then, video·audio output unit 350 outputs video (ENAV menu)·audio data of ENAV engine 300 as a video·audio output (D352, D354).

The ENAV menu in ENAV contents 30 (and/or 30W) is defined by moving image data (including animation), still image data, audio data, and text data, as described above. These data are sent to and decoded by the corresponding decoder in element decoder 340. The decoded data are sent as video data D352 to a monitor TV (not shown) and are displayed as a ENAV menu on the display screen of the monitor TV (step ST164; corresponding to "ENAV menu playback" in the second and third columns of FIG. 15). ENAV engine 300 then returns to a wait state (step ST158). In this state, ENAV engine 300 waits for the next event (user's remote-controller operation or the like in this case) (NO in step ST166; corresponding to "second event wait" in the second column of FIG. 15).

If the user has pressed the menu button of the nearby remote controller (not shown) again (YES in step ST166; corresponding to "second downward arrow" of the second column of FIG. 15), ENAV interpreter 330 checks if the ENAV playback information in ENAV contents 30 (and/or 30W) contains a script corresponding to resume (step ST168). If the ENAV playback information does not contain any script corresponding to resume (NO in step ST168), ENAV interpreter 330 sends a message indicating this to event generation·command/property processor 320. In response to this message, event generation·command/property processor 320 also sends that message to user event controller 310. Then, user event controller 310 outputs user event signal (B) that blocks (deters) the user event at that time (when the ENAV playback information does not contain any script corresponding to resume) (signal "X" output from user vent controller 310 in FIG. 1; step ST170), and returns to an event wait state.

On the other hand, if the ENAV playback information in ENAV contents 30 (and/or 30W) contains a script corresponding to menu call (YES in step ST168), event generation·command/property processor 320 converts an ENAV command (resume corresponding command in the ENAV playback information) received from ENAV interpreter 330 into a DVD control signal that instructs shift from the menu call state to pause OFF/resume playback (step ST172). The DVD control signal for "pause OFF/resume playback" is output from event generation·command/property processor 320 to DVD-Video playback controller 220 (step ST174).

At this time, event generation·command/property processor 320 outputs a video·audio output control signal as a "full video mode that means output of video and audio data of the DVD-Video playback engine" (step ST176). Then, video·audio output unit 350 outputs video·audio data of DVD-Video playback engine 200 as a video·audio output (D352, D354). ENAV engine 300 returns to an event wait state (step ST178).

The process in FIGS. 16 and 17 can be summarized as follows. That is, when the user has pressed the menu button on the user operation unit (a remote controller or front panel of DVD-Video player 100; not shown) (YES in step ST144) during title playback of DVD-Video contents 10 (step ST120), user event controller 310 in ENAV engine 300 receives this signal. At this time, when user's operation 40 which is not expected as any user event is executed at the user operation unit (NO in step S146), event generation·command/property processor 320 outputs a user event control signal (user event signal (B)) that "blocks a user event corresponding to user's operation at that time" (step ST148). In this manner, user event controller 310 can inhibit "a specific event from being transmitted according to a script described in the ENAV contents".

That is, since the process in step S148 in FIG. 16 or step ST170 in FIG. 17 is provided as needed, even when the description of a given script in the ENAV playback information in ENAV contents 30 (or 30W) is grammatically correct but it includes contents (command, parameter, and the like) that "currently running" DVD-Video playback engine 200 cannot cope with", an event corresponding to the description of that script can be clocked (deterred).

The script can describe, e.g., ENAV contents (ENAV menu) to be executed upon receiving user event signal (C) that means execution of menu call, switching of modes (full frame mode/full ENAV mode or mixed frame mode)" at that time, and control for outputting a "pause ON" (or "menu") command as a DVD control signal to DVD-Video playback controller 220 of DVD-Video playback engine 200.

The ENAV menu in ENAV contents 30 (and/or 30W) is defined by moving image data (including animation), still image data , audio data , and text data, as described above. These data are sent to and decoded by the corresponding decoder in element decoder 340, and are displayed as an ENAV menu. At this time, event generation·command/property processor 320 outputs a video-audio control signal as a full ENAV mode that means output of video·audio data of the ENAV engine, and video·audio output unit 350 outputs video·audio data (D340) of ENAV engine 300 as a video·audio output (D352, D354) (step ST162). If ENAV contents 30 (and/or 30W) does not include any ENAV menu contents (NO in step ST154), a video·audio output control signal is output as a full video mode that means output of video and audio data of DVD-Video playback engine 200, and video·audio data (D210) of DVD-Video playback engine 200 is output as a video·audio output (D352, D354) (step ST156). ENAV engine 300 returns to an event wait state again (step ST158).

On the other hand, upon receiving the "pause ON" (or "menu") command as the DVD control signal (YES in step ST122), DVD-Video playback engine 200 pauses playback (step ST120) of DVD-Video contents 10 (step ST124). (If the "menu" command is received in step ST122, a DVD-Video menu is displayed in step S124.)

If the user has pressed the menu button of the user operation unit (a remote controller or front panel of DVD-Video player 100; not shown) again (YES in step ST166) during menu playback (step ST126, ST164; the DVD-Video menu is displayed in the full video mode, or the ENAV menu is displayed in the full ENAV mode), user event controller 310 of ENAV engine 300 receives this signal. Then, user event controller 310 outputs this signal as user event signal (C) to event generation·command/property processor 320.

Note that the script in ENAV contents 30 (and/or 30W) describes, e.g., "control for making ENAV engine 300 return to a wait state upon receiving user event signal (C) that means resume", switching of modes (full frame mode/full ENAV mode or mixed frame mode) at that time, and control for outputting a "pause OFF" command ("resume" command when the "menu" command is output) as a DVD control signal to DVD-Video playback controller 220 of DVD-Video playback engine 200.

That is, upon receiving user event signal (C) that means resume, ENAV engine 300 can stop execution of menu display, and return to a wait state (step ST178), while DVD-Video playback engine 200 can resume title playback (step ST132). Since event generation·command/property processor 320 outputs a video·audio output control signal that means a full video mode, video·audio data (D210) of DVD-Video playback engine 200 is output as a video·audio output (D352, D354).

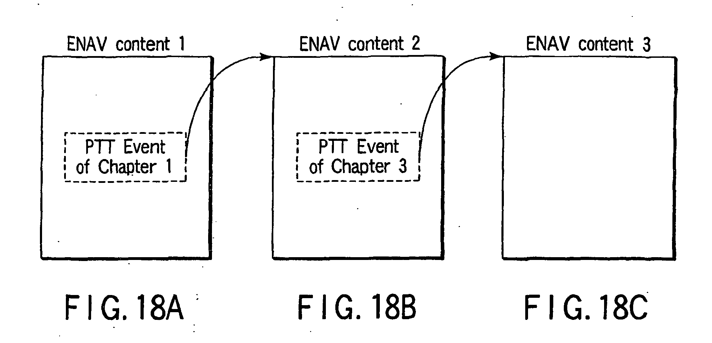

FIGS. 18A-18C are views for explaining a case wherein ENAV content 1 is played back before playback of chapter 1, ENAV content 2 is played back in synchronism with playback of chapters 1 and 2, and ENAV content 3 is played back in synchronism with playback of chapters 3 and 4, when the DVD-Video playback engine successively plays back chapters 1 to 4. An example of synchronization (or connection or combination) between playback of ENAV contents 30 (or 30W) and playback of the video contents (chapters) will be explained below with reference to FIGS. 18A-18C.

A system model of an apparatus (DVD-Video player 100) that executes the aforementioned process will be briefly explained first.

### <System Model>

Interactive DVD-Video player 100 which has been explained with reference to FIG. 1 comprises DVD-Video playback engine 200 that plays back DVD-Video contents 10, and ENAV engine 300 that plays back ENAV contents 30 (and/or 30W). DVD-Video playback engine 200 outputs "DVD event" and "DVD status" signals to an event/command handler (corresponding to the event generation·command/ property processor) 320 so as to notify an event or property in DVD-Video playback engine 200.

Event/command handler 320 in ENAV engine 300 outputs an "ENAV event" and "ENAV property" to ENAV interpreter (corresponding to the ENAV interpreter) 330 so as to notify an event and property in response to the "DVD event" and "DVD status".

ENAV interpreter 330 outputs an "ENAV command" to event/command handler 320 to control some functions (video·audio output unit 350 and the like) in ENAV engine 300 and DVD-Video playback. When the "ENAV command" is a command for DVD-Video playback control, event/command handler 320 outputs a "DVD control" signal to DVD-Video playback engine 200 so as to control DVD-Video playback.

### <Premises>

This example is premised on that DVD-Video playback engine 200 successively plays back chapters 1, 2, 3, and 4 (from DVD video disc 1). On the other hand, ENAV contents 30 (30W) are premised on that the contents include ENAV contents 1, 2, and 3. Note that each chapter created by the video contents provider is handled as Part of Title (PTT) in DVD-Video.

Under these premises, in this example, ENAV engine 300 plays back ENAV content 1 before playback of chapter 1 (FIG. 18A), plays back ENAV contents 2 in synchronism with playback of chapters 1 and 2 (FIG. 18B), and plays back ENAV content 3 in synchronism with playback of chapters 3 and 4 (FIG. 18C).

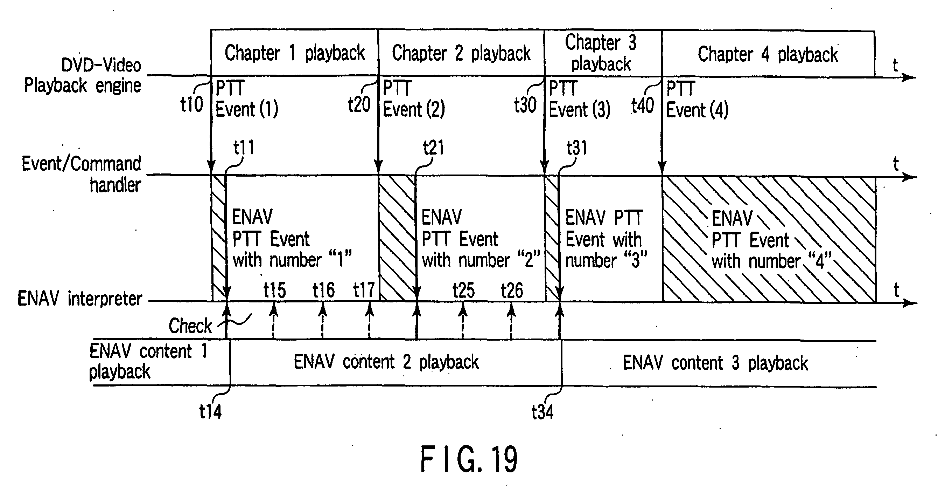

That is, in this example, ENAV content 1 has an event description that instructs to jump to ENAV content 2 at the beginning of chapter 1 (see t10, t11, t14 in FIG. 19). Also, ENAV content 3 has an event description that instructs to jump to ENAV content 3 at the beginning of chapter 3 (see t30, t31, t34 in FIG. 19). However, ENAV content 3 has no event description.

On the other hand, a "DVD event" signal from DVD-Video playback engine 200 is held in event/command handler 320 until ENAV interpreter 330 checks a corresponding ENAV event. If ENAV playback information in the ENAV content includes an event description, ENAV interpreter 330 periodically checks such event (see t15 to t17, t25 to t26 in FIG. 19).

When ENAV interpreter 330 checks an ENAV event, if a corresponding event is held in event/command handler 320, ENAV interpreter 330 reads that event as an "ENAV event". Then, the event in event/command handler 320 is cleared (deleted or erased) by ENAV interpreter 330.

FIG. 19 is a view for explaining a case (case 1) wherein the DVD-Video playback engine outputs a PTT event with a chapter number as a DVD event at the beginning of each chapter, and the ENAV engine begins to play back corresponding ENAV contents.

### <Case 1>

In this case, DVD-Video playback engine 200 outputs, as a DVD event, a PTT event (PTT Event(1) to PTT Event(4)) with a chapter number at the beginning (t10, t20, t30, t40, . . .) of each chapter. Upon receiving this DVD event, event/command handler 320 holds the event with the chapter number as an ENAV event. ENAV interpreter 330 checks an ENAV event for PTT (chapter) and the number held in event/command handler 320 (t11, t21, t31, . . .). If the checked number is "1" or "3", ENAV engine 300 begins to play back an ENAV content (ENAV contents 2 and 3 in the example in FIG. 19) corresponding to that number (t14, t34), and that event (held in event/command handler 320) is cleared.

Note that FIG. 19 exemplifies a case wherein playback of ENAV content 2 starts in response to PTT Event(1), playback of ENAV content 2 continues in response to PTT Event(2), playback of ENAV content 3 starts in response to PTT Event(3), and playback of ENAV content 3 continues in response to PTT Event(4) (not to start playback of ENAV content 4). However, such case is merely a descriptive example. There are many playback patterns of ENAV content m in response to PTT Event(n).

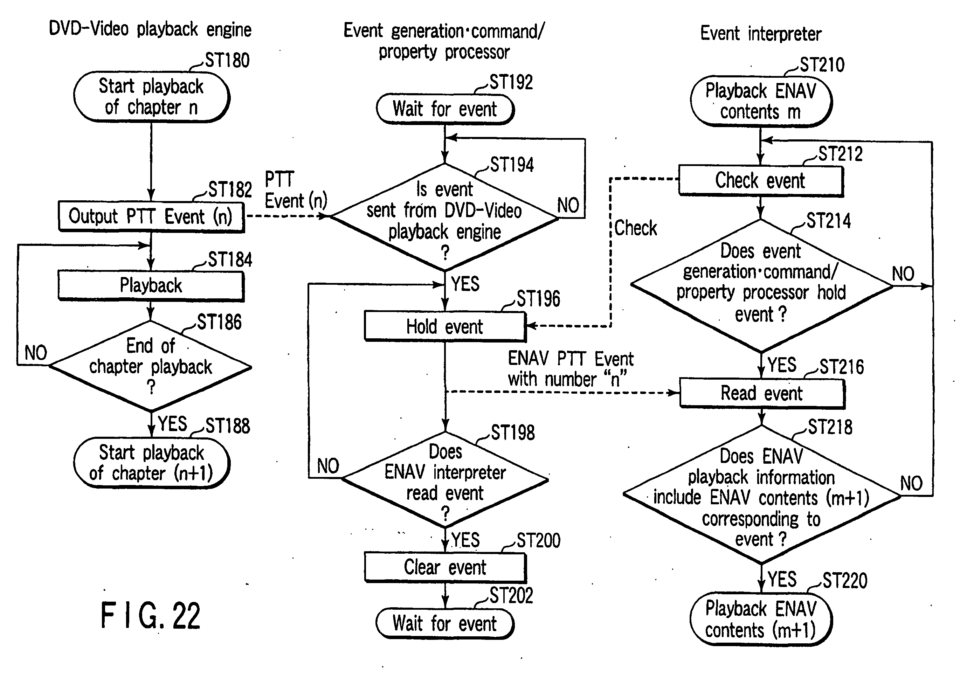

FIG. 22 is a flow chart for explaining an operation example of the DVD-Video playback engine, event generation·command/property processor, and ENAV interpreter in correspondence with the case of FIG. 19 (case 1).

Assume that DVD-Video playback engine 200 in DVD-Video player 100 loaded with DVD video disc 1 with the format shown in FIG. 30 or 31 starts playback of chapter n (initially, n = 1) in a given video title set (VTS) recorded on the DVD-Video area (step ST180). Then, DVD-Video playback engine 200 outputs PTT event (1) to event/command handler 320 at the beginning (t10) of chapter 1 (PTT Event(n) = PTT Event(1); step ST182), and starts playback of chapter 1 (step ST184). During this interval, event/command handler 320 waits for an event (step ST192, NO in step ST194). Note that PTT event (1) is.one argument that describes chapter number "1".

Upon receiving PTT event (1) (YES in step ST194), event/command handler (event generation·command/property processor) 320, which has waited for an event so far (step ST192, NO in step ST194), holds a PTT event (ENAVPTT event) with chapter number "1" as an ENAV event (step ST196). Event/command handler 320 maintains this event holding state while ENAV interpreter 330 does not read any event (NO in step ST198).

When event/command handler 320 holds the ENAVPTT event with chapter number "1" (t11 in FIG. 19), ENAV interpreter 330 can read that event as an ENAV event (step ST216 to be described later). When ENAV interpreter 330 reads an event (YES in step ST198), event/command handler 320 clears the held event (step ST200), and returns to an event wait state (step ST202).

On the other hand, ENAV interpreter 330 checks the held event contents (ENAV event for PTT and its chapter number) of event/command handler 320 periodically (e.g., t15, t16, t17, . . . in FIG. 19) (ST212) while playback of given ENAV content m (e.g., ENAV content m = 2 in FIG. 19) is underway (step ST210). Upon this event check, if event/command handler 320 does not held any event (NO in step ST214), periodic event check is repeated.

The description will revert to t10 in FIG. 19. After ENAV interpreter 330 reads an event (ENAVPTT event "1") (t11), ENAV engine 300 starts playback of a corresponding ENAV content (ENAV content 2 in this case) (t14 and subsequent timings).

On the other hand, DVD-Video playback engine 200 continues to play back chapter 1 (n = 1) (step ST184, NO in step ST186). Upon completion of playback of chapter 1 (n = 1) (YES in step ST186), playback of chapter 2 (n + 1 = 2) starts (step ST188). As a result, the-process of DVD-Video playback engine 200 returns to step ST180 (except that chapter number n has been incremented by 1).

DVD-Video playback engine 200 outputs PTT event (2) at the beginning (t20 in FIG. 19) of chapter 2 (step ST182). Then, ENAV interpreter 330 reads an ENAVPTT event with number "2" from event/command handler 320 (t21; step ST216). However, in this example, since ENAV content 2 has no event description associated with chapter 2, ENAV interpreter 330 ignores that event (ENAVPTT event with number "2") (this process is included in a process executed when NO is determined in step ST198).

DVD-Video playback engine 200 outputs PTT event (3) at the beginning (t30 in FIG. 19) of chapter 3 (step ST182). Then, ENAV interpreter 330 reads an ENAVPTT event with number "3" from event/command handler 320 (t31; step ST216). In this example, since ENAV content 3 has an event description associated with chapter 3, ENAV interpreter 330 starts playback of that event (ENAVPTT event with number "3") (step ST220).

DVD-Video playback engine 200 outputs PTT event (4) at the beginning (t40 in FIG. 19) of chapter 4 (step ST182). Then, event/command handler 320 holds an ENAVPTT event with number "4" (step ST196). However, since this example assumes a case wherein ENAV content 3 has no event description, ENAV interpreter 330 skips event check (this process is included in a process executed when the process of ENAV interpreter 330 stays in the loop of NO in step ST214).

Generally speaking, if event/command handler 320 holds an event (YES in step ST214) upon event check, that event (ENAVPTT event with number "n") is read (step ST216). At this time, if ENAV contents 30 (and/or 30W) do not include any ENAV content "m+1" corresponding to that event (ENAVPTT event "n") (NO in step ST218), the control returns to event check (step ST212). During this interval, contents to be played back by ENAV engine 300 are ENAV content "m" in this example. On the other hand, if a script in the ENAV playback information describes ENAV content "m+1" at the read timing of ENAVPTT event "n" (YES in step ST218), that ENAV content "m+1" is played back (step ST220).

The process in FIG. 22 can be summarized as follows. That is, in the process for playing back recorded contents that include DVD-Video contents 10 and ENAV contents 30 from DVD video disc 1 having a volume space complying with the DVD-Video standard, DVD-Video contents 10 of the recorded contents played back from DVD video disc 1 are acquired (step ST180), and ENAV contents 30 of the recorded contents played back from DVD video disc 1 are acquired (step ST210). Then, the contents of acquired ENAV contents 30 are executed (steps ST194 to ST220) in accordance with a predetermined event (step ST182) corresponding to the contents of acquired DVD-Video contents 10.

Note that ENAV engine 300 plays back ENAV contents 30 of the recorded contents on DVD video disc 1, and controls playback of ENAV contents 30 in connection with that of DVD-Video contents 10 in accordance with the contents of ENAV contents 30 (broken arrows in FIG. 22). This ENAV engine 300 is configured so that the contents of ENAV contents 30 change in combination, connection, or synchronism with a change in playback condition of DVD-Video contents 10 in the volume space complying with the DVD-Video standard (ENAV contents 1 to 3 change in combination with a change in chapters 1 to 3 of DVD-Video in FIGS. 19 to 21; in other words, synchronization between DVD-Video playback and ENAV contents).

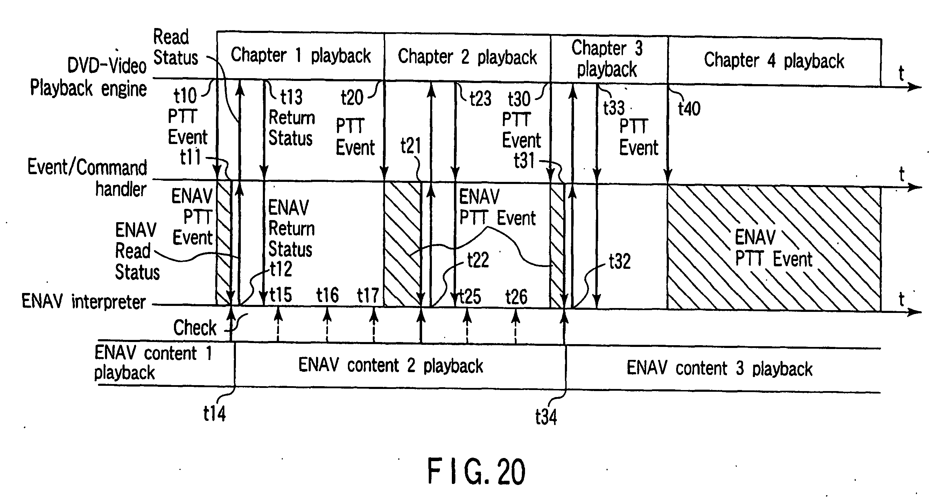

FIG. 20 is a view for explaining a case (case 2) wherein the DVD-Video playback engine exchanges event/status data with the ENAV engine, and the ENAV engine plays back ENAV contents on the basis of the exchange result.

### <Case 2>

In this case, DVD-Video playback engine 200 outputs a PTT event to event/command handler 320 at the beginning (t10, t20, t30, t40, . . .) of each chapter. After reception of the PTT event, event/command handler 320 holds this event as an ENAV event. ENAV interpreter 330 checks the ENAV event (ENAVPTT event) held in event/command handler 320. If that ENAV event is a corresponding event (to an ENAV content which is ready to be played back at that time), ENAV interpreter 330 reads that event, and clears that event (held in event/command handler 320).

After that, ENAV interpreter 330 outputs ENAV read status (t12, t22, t32) as an ENAV command in accordance with the description in the ENAV content (corresponding to that event). Then, event/command handler 320 outputs read status as a DVD control signal (t12, t22, t32) to detect a chapter number upon playback.

Upon receiving the DVD control signal, DVD-Video playback engine 200 returns the chapter number as return status to event/command handler 320 (t13, t23, t33). Then, event/command handler 320 returns the returned chapter number to ENAV interpreter 330 as ENAV return status (t13, t23, t33).

In the example in FIG. 20, if the chapter number in ENAV return status is "1" or "3", ENAV engine 300 begins to play back a corresponding ENAV content (ENAV content 2 or 3 in the example in FIG. 20) (t14, t34). If the chapter number in ENAV return status is neither "1" nor "3", ENAV engine 300 does not start playback of another ENAV content (in the example of FIG. 20, if the ENAV content whose playback is underway is "2", playback of that ENAV content 2 continues).

In the arrangement of FIG. 1, DVD-Video playback engine 200 can include DVD-Video controller 220 which controls playback of DVD video disc 1, and has the following arrangement. That is, DVD-Video playback controller 220 outputs a DVD event signal associated with the playback condition (menu call, title jump, chapter jump, or the like) of DVD video disc 1 to event generation·command/property processor 320, and also a DVD status signal associated with the property (audio language, sub-picture caption language, playback operation (play, stop, pause, fastforward, rewind, or the like), contents of the disc, and the like set in the player unit) of DVD video disc 1 to event generation·command/property processor 320.

Note that event generation·command/property processor 320 can execute control of video·audio output unit 350 based on ENAV playback information contained in ENAV contents (30 or 30W) in accordance with the DVD event signal (e.g., PTT event at t10 in FIG. 20) and/or DVD status signal (e.g., return status at t13 in FIG. 20).

The ENAV contents (30 or 30W) can include first navigation contents (30) played back from DVD video disc 1, and second navigation contents (30W) acquired from an external system via a communication line (Internet or the like).

In this case, the control by event generation·command/property processor 320 in accordance with the DVD event signal and/or DVD status signal can be executed for the control processes based on both the first and second navigation contents (30, 30W).

The DVD event signal is configured to be generated in correspondence with menu call that calls a menu recorded on DVD video disc 1, title jump that switches a title to be played back from DVD video disc 1, or chapter (PTT) jump that switches a chapter to be played back from DVD video disc 1.

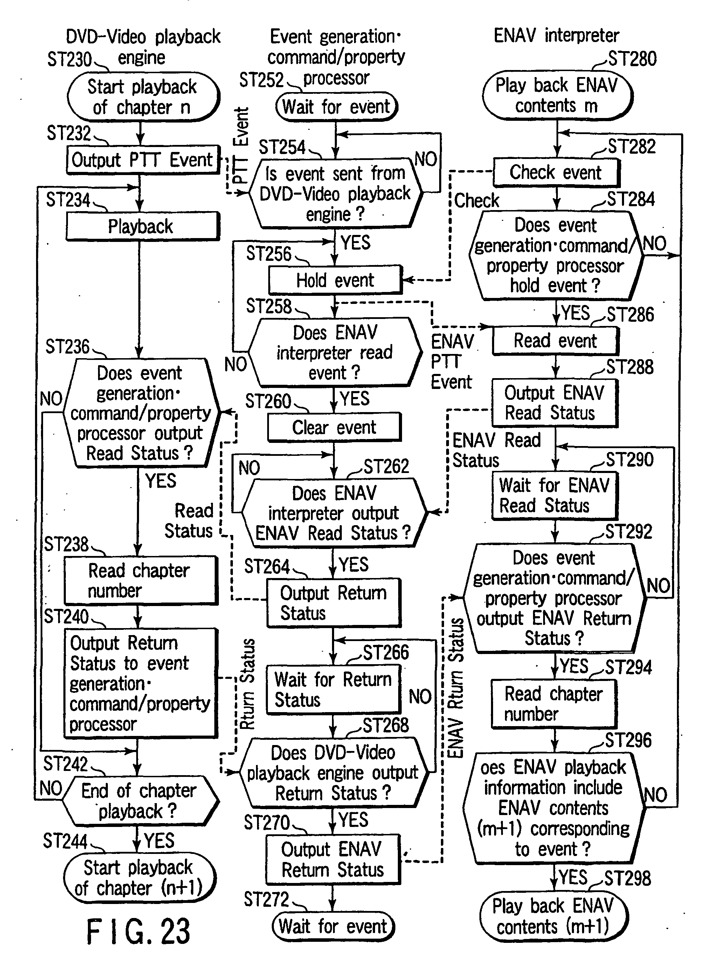

FIG. 23 is a flow chart for explaining an operation example of the DVD-Video playback engine, event generation·command/property processor, and ENAV interpreter in correspondence with the case of FIG. 20 (case 2).

Assume that DVD-Video playback engine 200 in DVD-Video player 100 in FIG. 1 loaded with DVD video disc 1 with the format shown in FIG. 30 or 31 starts playback of chapter n (initially, n = 1) in a given video title set (VTS) recorded on the DVD-Video area (step ST230). Then, DVD-Video playback engine 200 outputs a PTT event to event/command handler 320 at the beginning (t10) of chapter 1 (step ST232), and starts playback of chapter 1 (step ST234). During this interval, event/command handler 320 waits for an event (step ST252, NO in step ST254).

Upon receiving the PTT event (YES in step ST254), event/command handler 320 holds this PTT event as an ENAV event (step ST256). During this interval, ENAV interpreter 330 plays back ENAV content m (step ST280).

ENAV interpreter 330 periodically checks an ENAV event for PTT (ENAVPTT event) during playback of ENAV content m (t15, t16, t17, and the like in FIG. 20, although timings before t10 are not shown; step ST282, NO in step ST284). If event/command handler 320 holds an ENAVPTT event (YES in step ST284), ENAV interpreter 330 reads that held ENAVPTT event as an ENAV event (t10 to t11, t20 to t21, t30 to t31, and the like; step ST286).

Event/command handler 320 waits (NO in step ST258) until ENAV interpreter 330 reads the held ENAVPTT event. If ENAV interpreter 330 reads the held ENAVPTT event (t11, t21, t31, and the like; YES in step ST258), the event held in event/command handler 320 is cleared (step ST260).

After the ENAVPTT event is read, ENAV interpreter 330 outputs ENAV read status as an ENAV command (t12, t22, t32, and the like; step ST288).

Event/command handler 320 waits (NO in step ST262) until ENAV interpreter 330 outputs the ENAV command of read status. Upon receiving the ENAV command of read status from ENAV interpreter 330 (YES in step ST262), event/command handler 330 outputs the read status command as a DVD control signal (t12, t22, t32, and the like; step ST264).

Upon receiving the read status command (DVD control signal) (YES in step ST236), DVD-Video playback engine 200 reads chapter number n (n = 1 in this case) whose playback is now underway (step ST238), and returns chapter number "1" as return status to event/command handler 320 (t13, t23, t33, and the like; step ST240). If no read status command is received (NO in step ST236), the processes in steps ST238 and ST240 are skipped.

After event/command handler 320 outputs the read status command, it waits for return status from DVD-Video playback engine 200 (step ST266, NO in step ST268). Upon receiving return status from DVD-Video playback engine 200 (t13, t23, t33, and the like; YES in step ST268), event/command handler 320 returns chapter number "1" as ENAV return status to ENAV interpreter 330 (t13 in this case; step ST270), and then waits for the next event (step ST272).

ENAV interpreter 330 waits for ENAV return status from event/command handler 320 after it outputs ENAV read status (step ST290, NO in step ST292). Upon receiving ENAV return status from event/command handler 320 (t13, t23, t33, and the like; YES in step ST292), ENAV interpreter 330 reads chapter number n (n = 1 in this case) that DVD-Video playback engine 200 is currently playing back (t13 in this case; step ST294). ENAV interpreter 330 checks if the ENAV playback information which is being executed includes a script of ENAV content "m + 1" ("m + 1" = 2 if ENAV content m which is now being played back is "m = 1") corresponding to the event (ENAVPTT event) read in step S286 (step ST296).

In the example of FIG. 20, ENAV content 1 whose playback is now underway has an event description for a PTT event of chapter 1 (YES in step ST296). With this event description, ENAV engine 300 begins to play back ENAV content 2 (t14; step ST298).

On the other hand, while no read status is output from event/command handler 320 (NO in step ST236), or if DVD-Video playback engine 200 outputs return status to event/command handler 320 (step ST240) after read status is output from event/command handler 320 (YES in step ST236), DVD-video playback engine 200 continues the processes in steps ST234 to ST240 until playback of chapter n (initially, n = 1) which is currently being played back comes to an end (NO in step ST242). Upon completion of playback of that chapter n (= 1) (YES in step ST236), DVD-Video playback engine 200 begins to play back next chapter n + 1 (= 2) (t20; step ST244).

After completion of playback of chapter 1, DVD-Video playback engine 200 outputs a PTT event at the beginning (t20) of chapter 2 (step ST232). Then, event/command handler 320 holds this PTT event as an ENAV event (step ST256). ENAV interpreter 330 checks this ENAV event for PTT (step ST282), reads it as an ENAV event (t21; ST286), and then clears the event held in event/command handler 320 (step ST260).

ENAV interpreter 330 sends a command (ENAV read status) to DVD-Video playback engine 200 to read a chapter number (which is currently being played back) via an ENAV command and DVD control signal (t22; step ST288). Then, ENAV interpreter 330 reads number "2" (as the number of the chapter which is currently being played back) from DVD-Video playback engine 200 via a DVD status signal and ENAV property (t23; step ST294). If ENAV content 2 does not include any event description for chapter 2 (NO in step ST296), ENAV interpreter 330 continues to play back ENAV content 2 (t23 to t34). During this interval, DVD-Video playback engine 200 continues to play back chapter 2 (t20 to t30).

After completion of playback of chapter 2, DVD-Video playback engine 200 outputs a PTT engine at the beginning (t30) of chapter 3 (step ST232). Then, event/command handler 320 holds this PTT event as an ENAV event (step ST256). ENAV interpreter 330 checks this ENAV event for PTT (step ST282), reads it as an ENAV event (t21; ST286), and then clears the event held in event/command handler 320 (step ST260).

ENAV interpreter 330 sends a command (ENAV read status) to DVD-Video playback engine 200 to read a chapter number (which is currently being played back) via an ENAV command and DVD control signal (t32; step ST288). Then, ENAV interpreter 330 reads number "3" (as the number of the chapter which is currently being played back) from DVD-Video playback engine 200 via a DVD status signal and ENAV property (t33; step ST294). In this case, since ENAV content 2 includes an event description for chapter 3, ENAV interpreter 330 starts playback of ENAV content 3 (t34; step ST298).

After completion of playback of chapter 3, DVD-Video playback engine 200 outputs a PTT engine at the beginning (t40) of chapter 4 (step ST232). Then, event/command handler 320 holds this PTT event as an ENAV event (step ST256). If ENAV content 3 has no event description (NO in step ST284), ENAV interpreter 330 skips event check (step ST282) (or if it formally checks, no process is done in response to that check result). As a result, event/command handler 320 maintains the event held so far (step ST256, NO in step ST258).

The process in FIG. 23 can be summarized as follows. That is, in the process for playing back recorded contents that include DVD-Video contents 10 and ENAV contents 30 from DVD video disc 1 having a volume space complying with the DVD-Video standard, DVD-Video contents 10 of the recorded contents played back from DVD video disc 1 are acquired (step ST230), and ENAV contents 30 of the recorded contents played back from DVD video disc 1 are acquired (step ST280). Then, the contents of acquired ENAV contents 30 are executed (steps ST254 to ST298) in accordance with a predetermined event (step ST232) corresponding to the contents of acquired DVD-Video contents 10.

Note that ENAV engine 300 plays back ENAV contents 30 of the recorded contents on DVD video disc 1, and controls playback of ENAV contents 30 in connection with that of DVD-Video contents 10 in accordance with the contents of ENAV contents 30 (broken arrows in FIG. 23). This ENAV engine 300 is configured so that the contents of ENAV contents 30 change in combination, connection, or synchronism with a change in playback condition of DVD-Video contents 10 in the volume space complying with the DVD-Video standard (ENAV contents 1 to 3 change in combination with a change in chapters 1 to 3 of DVD-Video in FIGS. 19 to 21; in other words, synchronization between DVD-Video playback and ENAV contents).

FIG. 21 is a view for explaining another case (case 3) wherein the DVD-Video playback engine outputs a PTT event with a chapter number as a DVD event at the beginning of each chapter, and the ENAV engine begins to play back corresponding ENAV contents.

### <Case 3>

In this case, ENAV interpreter 330 outputs an enable PTT number for a PTT event in advance to event/command handler 320 (t01 in FIG. 21). As a result, an output request of only ° a corresponding ENAVPTT event (to the enable PTT number output in advance) is issued.

DVD-Video playback engine 200 outputs, as a DVD event signal, a PTT event with a chapter number at the beginning (t10, t20, t30, t40) of each chapter. Event/command handler 320 checks if this DVD event signal is for PTT for a requested chapter (by the enable PTT number output in advance). If this DVD event signal is the requested one, event/command handler 320 holds the ENAVPTT event with the chapter number (t11, t31, and the like). Otherwise, this DVD event signal for PTT is not held in event/command handler 320.

ENAV interpreter 330 checks the ENAV event held in the event/command handler 320 (t11, t15, t16, t17, . . .). If the checked ENAV event is a corresponding event (to the enable PTT number output in advance) (check result at, e.g., t11), ENAV interpreter 330 reads that event (e.g., ENAVPTT event with number "1"), and then clears that event held in event/command handler 320. After that, ENAV engine 300 begins to play back a corresponding ENAV content (ENAV content 2 in the example of FIG. 21) (t14).

Note that the requested PTT event (corresponding to the enable PTT number output in advance) can be selected on the DVD-Video playback engine 200 side. As a result, the "requested PTT event" can be sent from DVD-Video playback engine 200 to only event/command handler 320.

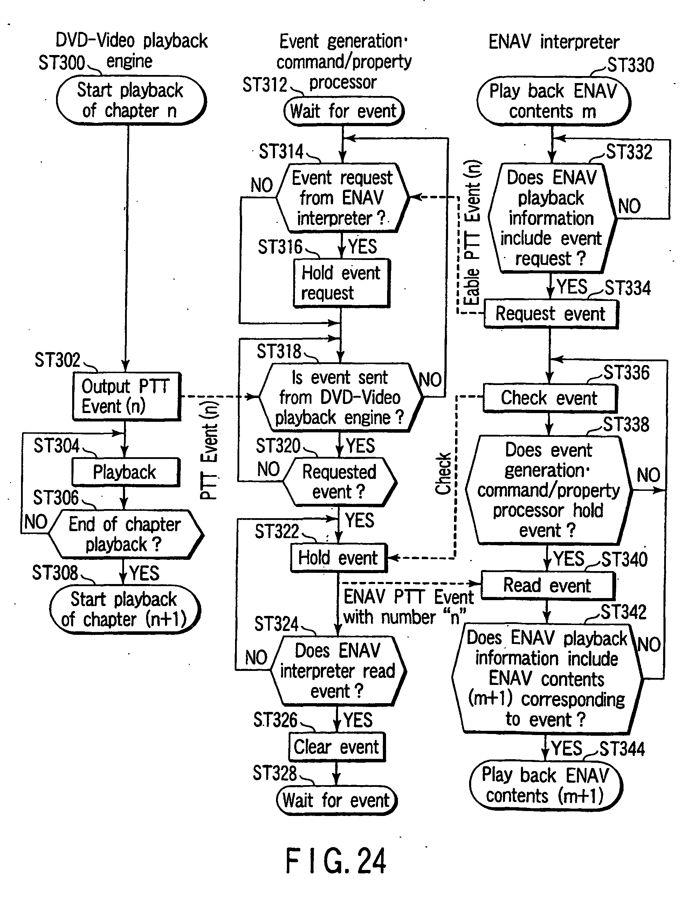

FIG. 24 is a flow chart for explaining an operation example of the DVD-Video playback engine, event generation-command/property processor, and ENAV interpreter in correspondence with the case of FIG. 21 (case 3) .

Assume that DVD-Video playback engine 200 in DVD-Video player 100 loaded with DVD video disc 1 with the format shown in FIG. 30 or 31 starts playback of chapter n (initially, n = 1) in a given video title set (VTS) recorded on the DVD-Video area (step ST300). Then, DVD-Video playback engine 200 outputs a PTT event (n = 1) to event/command handler 320 at the beginning (t10) of chapter 1 (step ST302), and starts playback of chapter 1 (step ST304). Playback of this chapter continues until it comes to an end. Upon completion of playback of that chapter (n = 1) (t20; YES in step ST306), playback of the next chapter (n + 1 = 2) starts (step ST308).

During this interval, event/command handler 320 waits for an event (step ST312, NO In step ST318). Also, during this interval, ENAV interpreter 330 waits until a description of an event request appears in ENAV playback information in ENAV content m (initially, m = 1) (NO in step ST332), while it plays back ENAV content m (ST330).

If the ENAV content has a description of an event request (YES in step ST322), ENAV interpreter 330 outputs an enable PTT event with enable PTT number "1" for a PTT event to event/command handler 320 at an appropriate timing (t01; step ST334). This output timing is preferably-set before DVD-Video playback engine 200 outputs PTT event (1). Upon issuing this event request with the enable PTT number (YES in step ST314), the event request (enable PTT event (1)) is held in event/command handler 320 (step ST316). Event/command handler 320 waits until it receives a PTT event from DVD-Video playback engine 200.

DVD-Video playback engine 200 outputs PTT event (1) to event/command handler 320 at the beginning (t10) of chapter 1 (step S302). Note that PTT event (1) is one argument that describes chapter number "1".

Upon receiving PTT event (1) (YES in step ST318), since that event is the "requested PTT event (enable PTT event (1)) (YES in step ST320), event/command handler 320 holds the PTT event with chapter number "1" as an ENAV event (step ST322).

ENAV interpreter 330 checks the ENAV event for PTT and its chapter number (step ST336). At this time, since event/command handler 320 holds ENAVPTT event (1) with chapter number "1" (YES in step ST338), ENAV interpreter 330 reads that event as an ENAV event (step ST340). After ENAVPTT event (1) is read by ENAV interpreter 330 (YES in step ST334), event/command handler 320 clears the held event (step ST326), and then waits for the next event (step ST328).

After ENAVPTT event (1) is read (step ST340), if an ENAV content (m + 1 = 2) corresponding to the read event is included in ENAV playback information at that time (YES in step ST342), ENAV interpreter 330 begins to play back ENAV content 2 (t14; step ST344).

Likewise, ENAV interpreter 330 outputs enable PTT number "3" for a PTT event to event/command handler 320 (t03; step ST334).

After completion of playback of chapter 1 (YES in step ST306), DVD-Video playback engine 200 outputs PTT event (2) to event/command handler 320 at the beginning (t20) of chapter 2 (step ST302). However, in this example, since ENAV interpreter 330 does not request an ENAVPTT event with chapter number "2" (NO in step ST320), event/command handler 320 does not hold that event (PTT event (2)).

After completion of playback of chapter 2 (YES in step ST306), if DVD-Video playback engine 200 outputs PTT event (3) to event/command handler 320 (step ST302) at the beginning (t30; step ST308) of chapter 3, event/command handler 320 holds a PTT event with chapter number "3" (step ST322). Then, ENAV interpreter 330 checks the ENAV event for PTT and its number (step ST336). After that, ENAV interpreter 330 reads that (checked) event as an ENAV event (step ST340). After the event is read (YES in step ST324), the event held in event/command handler 320 is cleared (step ST326). If an ENAV content (ENAV content 3 in this case) corresponding to the read event is described in ENAV playback information (YES in step ST342), ENAV engine 300 starts playback of that ENAV content 3 (t34; step ST344).

After completion of playback of chapter 3 (YES in step ST306), DVD-Video playback engine 200 outputs PTT event (4) to event/command handler 320 at the beginning (t40; step ST308) of chapter 4 (step ST302). However, event/command handler 320 does not hold a PTT event with chapter number "4". This is because ENAV interpreter 330 does not request any ENAVPTT event with chapter number "4" in this example (NO in step ST320).

The process in FIG. 24 can be summarized as follows. That is, in the process for playing back recorded contents that include DVD-Video contents 10 and ENAV contents 30 from DVD video disc 1 having a volume space complying with the DVD-Video standard, DVD-Video contents 10 of the recorded contents played back from DVD video disc 1 are acquired (step ST300), and ENAV contents 30 of the recorded contents played back from DVD video disc 1 are acquired (step ST330). Then, the contents of acquired ENAV contents 30 are executed (steps ST314 to ST344) in accordance with a predetermined event (output or the like of step ST302) corresponding to the contents of acquired DVD-Video contents 10.

Note that ENAV engine 300 plays back ENAV contents 30 of the recorded contents on DVD video disc 1, and controls playback of ENAV contents 30 in connection with that of DVD-Video contents 10 in accordance with the contents of ENAV contents 30 (broken arrows in FIG. 24). This ENAV engine 300 is configured so that the contents of ENAV contents 30 change in combination, connection, or synchronism with a change in playback condition of DVD-Video contents 10 in the volume space complying with the DVD-Video standard (ENAV contents 1 to 3 change in combination with a change in chapters 1 to 3 of DVD-Video in FIGS. 19 to 21; in other words, synchronization between DVD-Video playback and ENAV contents).

DVD-Video player 100 of FIG. 1, which has the functions/arrangement that have been explained using FIGS. 2 to 24, can have the following operation mode and display mode. That is, this player 100 has a video mode (an inactive or event wait state of ENAV engine 300) and interactive mode (an active state of ENAV engine 300) in association with its operation, and has a full video mode (FIG. 7 and the like), full navigation mode (FIG. 8 and the like), and mixed mode (FIGS. 2, 3, 11, 12, and the like) in association with its display.

When DVD-Video playback engine 200 plays back DVD video contents 10 in the video mode (e.g., ST10 to ST18 in FIG. 6, or ST40 to ST48 in FIG. 10), the full video mode is used to display the playback video.

When ENAV engine 300 plays back ENAV contents 30 (and/or 30W) in the interactive mode (e.g., ST20 to ST36 in FIG. 6), the full navigation mode is used to display the playback video (ST34 to ST36 in FIG. 6).

Or when DVD-Video playback engine 200 plays back DVD video contents 10 and ENAV engine 300 plays back ENAV contents 30 (and/or 30W) in the interactive mode (e.g., ST50 to ST66 in FIG. 10), the mixed mode is used to display the playback video of DVD video contents 10 and that of ENAV contents 30 (and/or 30W) (ST64 to ST66 in FIG. 10).

In the mixed mode, the video contents of DVD video contents 10 and those of ENAV contents 30 (and/or 30W) can be displayed together (FIGS. 3, 3, 11, and 12).

Furthermore, when DVD-Video playback engine 200 plays back DVD video contents 10 in the interactive mode (e.g., ST10 to ST18 in FIG. 6, or ST40 to ST48 in FIG. 10), the full video mode is used to display the playback video.

The embodiment of the present invention implements a new contents providing method that integrates package media such as DVD-Video and the like, and on-line media which exploit the Internet and the like. This "new contents providing method" especially relates to switching of the start and end operations of synchronization (or, connection or combination) between off- and on-line contents.

Upon displaying off- and on-line contents on the user interface (on the display screen), there are roughly the following three modes:
(1) an off-line mode that displays using an off-line contents dedicated layout;
(2) an on-line mode that displays using an on-line contents dedicated layout; and
(3) a mixed mode that displays using a mixed layout of these contents.

Furthermore, since each mode has normal and abnormal display states, the states are classified as follows.
(1) In the off-line mode,
   [1-1] normal display; and
   [1-2] abnormal display ... off-line contents data is illegal or cannot be input due to some transmission error.
(2) In the on-line mode,
   [2-1] normal display; and
   [2-2] abnormal display ... on-line contents data is illegal or cannot be input due to some transmission error.
(3) In the mixed mode,
   [3-1] normal display (synchronous or simultaneous display); and
   [3-2] abnormal display ... off- or on-line contents data is illegal or cannot be input due to some transmission error.

Note that, for example, off-line contents data cannot be normally displayed when
[1-2-1] a disc is not normally loaded,
[1-2-2] information written on a disc cannot be normally read out due to defects or the like, and so forth.

Also, on-line contents data cannot be normally displayed when
[2-2-1] an on-line state is not established (net connection is not established),
[2-2-2] on-line information cannot be normally received due to communication errors or the like, and so forth.

Note that abnormalities in the off-line/on-line mixed mode occur due to combinations of individual causes.

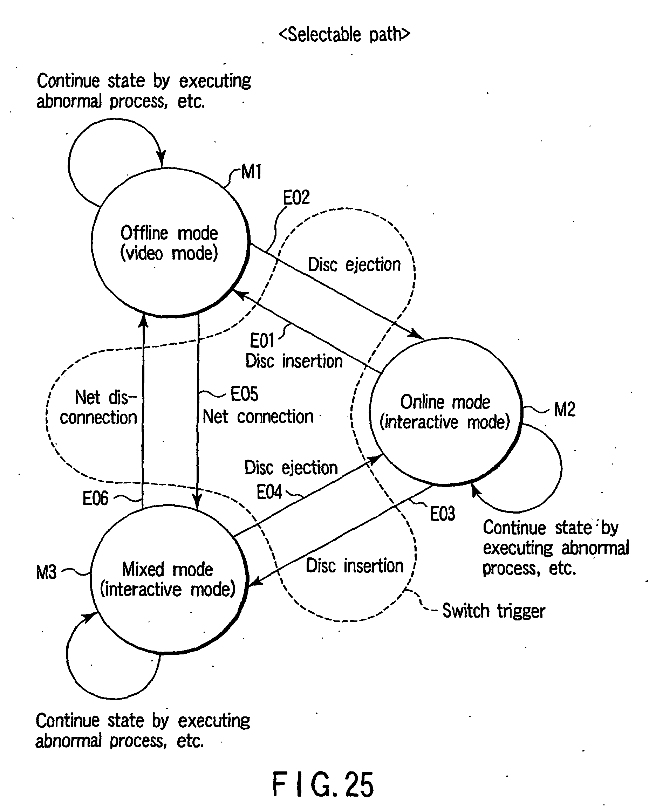

FIG. 25 is a view for explaining selectable paths among a plurality of modes (off-line mode, on-line mode, mixed mode) in the system arrangement of FIG. 1. In this embodiment, an outline of processes in the respective modes, i.e., the off-line mode, on-line mode, and mixed mode, and transitions among these modes will be explained.

Actual transitions along selectable paths exemplified in FIG. 25 can be made by the user setups. For example, when DVD video disc 1 is ejected from a disc drive (not shown) equipped in DVD-Video player 100 in FIG. 1 in off-line mode M1 (switch event E02), the control can transit to on-line mode M2 and can display on-line information. Or in off-line mode M1, internal display information (an on-screen display (to be abbreviated as OSD hereinafter) used to set operation parameters of the player itself, and the like) of player 100 can be displayed independently of disc 1 and net (communication line).

From on-line mode M2, the control can transit to off-line mode M2 or mixed mode M3 upon detection of loading of disc 1 (switch event E01 or E03). If such mode transition function is disabled (by, e.g., user's operation via the OSD of the player itself), display can be continued in on-line mode M2, even when the aforementioned switch event has occurred.

In general, since the information can be read out from DVD video disc 1 loaded in DVD-Video player 100 faster than information exchange via the net such as the Internet or the like, off-line contents playback (DVD-Video playback) can improve the quality of displayed images (information can be read out at a rate of 10 Mbps or higher in DVD-Video playback).

In the interactive mode (M3) in FIG. 25, display exemplified in FIG. 2, 3, 11, or 12 can be made. In this case, the ENAV contents can be downloaded not only from disc 1 but also from the Internet.

If free transitions are allowed among various modes, as shown in FIG. 25, the appeal of the entire contents can be improved by combining the off-line contents (DVD-Video contents 10) and latest information (Web contents 30W) on the net (as an example that can improve the appeal of the entire contents using mixed mode M3, an on-line battle game is known).

For this reason, transition from on-line mode M2 to mixed mode M3 upon loading of disc 1 (switch event E03) brings some advantages to the user. The same applies to transition from off-line mode M1 to mixed mode M3 upon detection of net connection (switch event E05). By contrast, when disc 1 is ejected in mixed mode M3 (switch event E04), the control can transit to on-line mode M2 or can continue a process in a processing routine determined in mixed mode M3. When net disconnection is detected (switch event E06) in mixed mode M3, the control can automatically return to off-line mode M1.

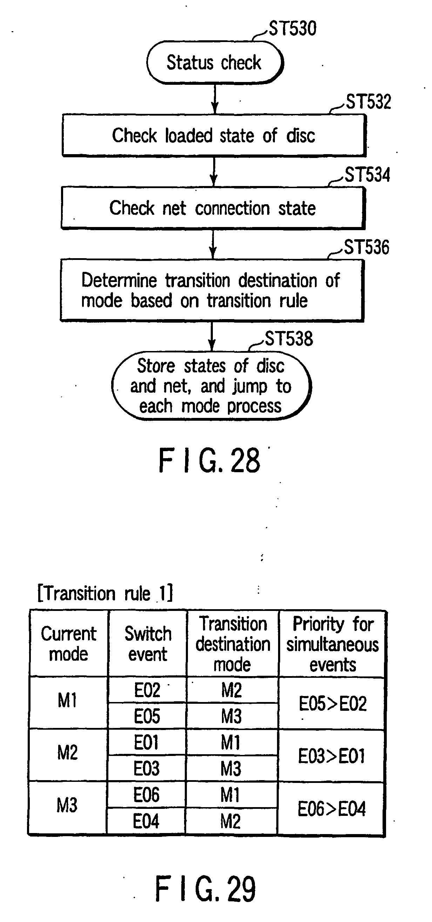

The aforementioned mode transitions can be made according to a method (e.g., transition rule 1 in FIG. 29 to be described later) determined in advance in player 100, or a user's request.

Since the mode transition takes time, a problem about screen display during that time is posed. In this embodiment, this problem can be solved by executing the following process before the screen display of the transition destination is ready, upon making mode transition. That is, a still image (stored in a video RAM (not shown) in video output controller 352 in FIG. 1) immediately before transition of a video (irrespective of a moving or still image) displayed on the screen so far is frozen and displayed on the screen. When the screen display of the transition destination is ready, the frozen image (still image) displayed on the screen so far is seamlessly switched to a screen display image of the transition destination. Or upon making mode transition, a blueback video (that may include an OSD image of the player as needed) is displayed on the screen before the screen display of the transition destination is ready. Then, when the screen display of the transition destination is ready, the blueback video displayed on the screen so far is switched to a screen display image of the transition destination.

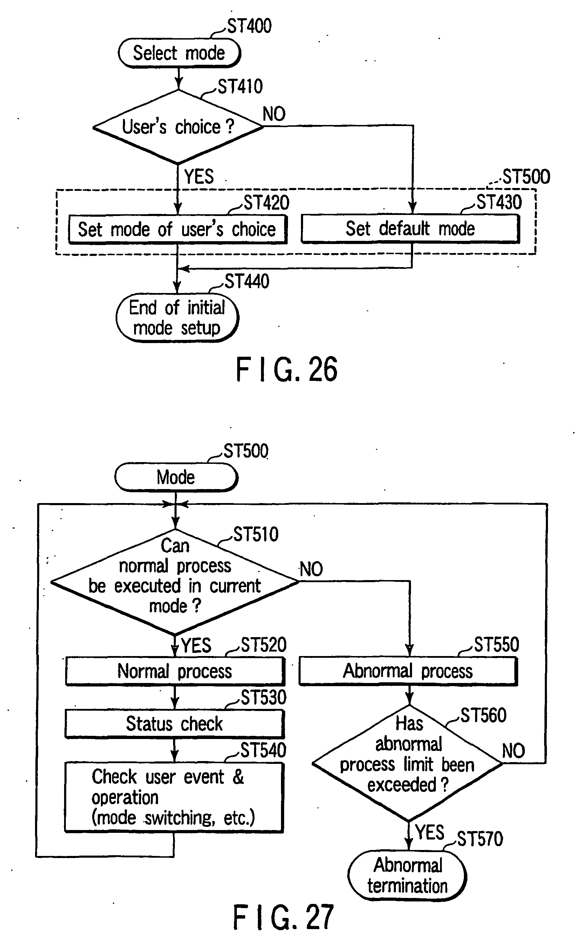

FIG. 26 is a flow chart for explaining an example of which one of the plurality of modes shown in FIG. 25 is set first. The process of this flow chart can be written in a program ROM (not shown) as an initial setup program (a part of firmware) of DVD-Video player 100 in FIG. 1. When the user has pressed, e.g., a setup menu button (not shown) of a remote controller (not shown), a mode select menu is displayed as, an on-screen display (OSD), on the display screen of an external monitor TV (not shown) connected to video output controller 352 (step ST400).

This mode select menu includes select buttons of off-line mode M1, on-line mode M2, and mixed mode M3, and an OK button, although not shown. If the user has selected one of the select buttons of off-line mode M1, on-line mode M2, and mixed mode M3, and has pressed the OK key by operating cursor keys and the OK key of the remote controller (not shown) (YES in step ST410), the selected mode (e.g., mixed mode M3) is set in player 100 of FIG. 1 (step ST420). For example, even when off-line mode M1 is a default mode, if the user selects none of these modes (NO in step ST410), the default mode (off-line mode M1 in this example) is set in player 100 of FIG. 1 (step ST430). Upon completion of the setup of the mode selected by the user or as the default mode (step ST500), the process in FIG. 26 ends, and player 100 of FIG. 1 is ready to operate in the set mode (step ST440).

FIG. 27 is a flow chart for explaining an example of the processing contents in the current mode (the default mode or the mode of user's choice set in step ST500 in FIG. 26) in one of the plurality of modes shown in FIG. 25. The process of this flow chart can also be written in a program ROM (not shown) as an initial setup program of DVD-Video player 100 in FIG. 1.

It is checked if a normal process can be done using the mode (M1, M2, or M3) set by the mode setup process (step ST500) in FIG. 26 as the current mode (step ST510). If a normal process can be done (e.g., a normal DVD video disc playback in on-line mode/interactive mode M2) (YES in step ST510), that process is executed (step ST520). During this process, the processing program in FIG. 27 repeats status check (the loading state of disc 1, the playback operation state of disc 1, the connection state of a communication line such as the Internet or the like, the presence/absence of switching among modes M1 to M3, and the like) (step ST530). For example, if the user has operated the remote controller to switch the current mode from mode M2 to mode M3, that mode switch operation is executed (step ST540). Or if the user has changed the chapter number of a DVD-Video work, playback of which is underway, the chapter switch operation is executed in response to that user event, and the ENAV content playback switch operation in, e.g., steps ST194 to ST220 in FIG. 22, can be made (step ST540).

If a normal process cannot be done in the current mode (NO in step ST510), the control starts an abnormal process (step ST550). For example, if a disc tray (not shown) of player 100 is not closed when the user has pressed a play start button of the remote controller (not shown) in mode M2, a process for closing the disc tray is executed (step ST550, NO in step ST560), and a normal process is executed in current mode M2 (YES in step ST510). If disc 1 set on the disc tray suffers serious scratches, and its lead-in area, volume/file structure information area, or management information (VMG or the like in FIG. 30) cannot be read (NO in step ST510), since the abnormal process limit has been exceeded (YES in step ST560), the system of player 100 terminates abnormally (step ST570).

In the above description, on-line mode/interactive mode M2 has been exemplified. The flow of the process in FIG. 27 remains the same irrespective of whether the mode in FIG. 27 is off-line mode/video mode M1 or mixed mode/interactive mode M3 (except for their processing contents). For example, when a communication partner on the net has disconnected communication connection (this state can be determined by the status check process in step ST530), the system terminates abnormally (step ST570).

FIG. 28 is a flow chart for explaining the contents of the status check process (step ST530) in the processing shown in FIG. 27. In this case, a processing example executed when the control automatically transits to a mode different from the current mode depending on whether or not DVD disc 1 is inserted in DVD-Video player 100, and whether or not the Internet connection unit (400W, 400W*) is connected to the Internet or the like will be explained. The process of this flow chart can also be written in a program ROM (not shown) as an initial setup program of DVD-Video player 100 in FIG. 1.

When the control enters this status check process (step ST530), the loading state of disc 1 is checked first (step ST532). This check process can include additional check processes for checking whether or not the disc tray of the disc drive (not shown) is open, whether or not a disc is normally set on the disc tray if the disc tray is closed, whether or not the disc is one readable by player 100 if the disc is normally set (i.e., whether or not that disc complies with the DVD standard), and whether or not that disc is a defective one which suffers scratches, warps, and/or cracks.

If this check process finds an irreparable problem such as an unreadable disc, the system terminates abnormally (step ST570 in FIG. 27). However, if an error found is reparable (e.g., normal disc 1 is set, but the disc tray is not closed), the process for removing that error is executed (step ST550 in FIG. 27), and the flow returns to the status check process (step ST530).

Upon completion of the check process of the loaded state of disc 1, the connection state of a communication line such as the Internet or the like is checked (step ST534). This check process can include additional check processes for checking whether or not the Internet connection unit (400W, 400W*) in FIG. 1 is both physically and logically normally connected to a communication modem, whether or not modem hardware or TCP/IP software suffers any operation abnormality, and whether or not net connection with a communication partner has been established (check net connection/disconnection).

If this check process finds an irreparable problem such as any communication modem error or the like, the system terminates abnormally (step ST570 in FIG. 27). On the other hand, if the process finds a reparable, temporary-problem (e.g., the power switch of an external modem is OFF, but it is turned on later), the process for logically connecting the modem to the Internet connection unit in FIG. 1 or the like is executed (step ST550 in FIG. 27), and the flow then return to the status check process (step ST530).

Upon completion of the status check processes of the loaded state of disc 1 (step ST532) and the net connection state (step ST534), the transition destination of the mode is determined (step ST536) on the basis of a predetermined transition rule in accordance with the check result (corresponding to, e.g., one of switch events E01 to E06 in FIG. 25). After the check results of the loaded state of disc 1 (step ST532) and net connection state (step ST534) are temporarily stored in a memory (not shown), the control jumps to a process (its processing contents are shown in FIG. 27) of the determined mode (step ST538).

Note that mode transition by means of jump in step ST538 can be made according to a method (transition rule) determined in advance in the system of player 100 or user's request. As a method of making mode transition according to the user's request, for example, the control enters the mode select process (step ST400) in FIG. 26 in response to depression of a menu button on the remote controller (not shown), and the control transits to a mode of user's choice in step ST420 in that process. On the other hand, the following method of making mode transition according to the method (transition rule) determined in advance in the system of player 100 may be used.

FIG. 29 is a view for explaining an example of transition rule (transition rule 1) which is to be referred to upon determining the mode transition destination in the process in FIG. 28. In this case, assume that modes that allow mutual transition are modes M1 to M3 shown in FIG. 25. That is, in a rule, the current mode is mode M1, M2, or M3, switch events are uniquely assigned to each mode, and a mode as the transition destination is determined in correspondence with that switch event.

More specifically, when the current mode is off-line mode (video mode) M1, if switch event E02 (disc ejection) is detected, transition to on-line mode (interactive mode) M2 is designated; if switch event E05 (net connection) is detected, transition to mixed mode (interactive mode) M3 is designated. If two switch events E02 and E05 have occurred at the same time, this example preferentially selects switch event E05 (net connection) (priority: E05 > E02). When switch event E02 has occurred prior to switch event E05, mode transition corresponding to the event that has occurred earlier is designated irrespective of the priority (mode transition corresponding to the event that has occurred later is designated after the first mode transition).

When the current mode is on-line mode (interactive mode) M2, if switch event E01 (disc insertion/loading) is detected, transition to off-line mode (video mode) M1 is designated; if switch event E03 (disc insertion/loading) is detected, transition to mixed mode (interactive mode) M3 is designated. These two switch events E01 and E03 are switch triggers which have been generated due to an identical cause (disc insertion/loading), but this example preferentially select switch event E03 (priority: E03 > E01). These priority levels may be reversed by the user setup (priority: E03 < E01). Or one of switch events E01 and E03 may be disabled in advance.

When transition from mode M2 to mode M1 is to be effected in response to the switch trigger "disc insertion/loading", the user may select mode M1 in step ST420 in FIG. 26. At this time, this user selection has a higher priority level than transition rule 1 in FIG. 29.

Likewise, when the current mode is mixed mode (interactive mode) M3 , if switch event E06 (net disconnection) is detected, transition to off-line mode (video mode) M1 is designated; if switch event E04 (disc ejection) is detected, transition to on-line mode (interactive mode) M2 is designated. If two switch events E06 and E04 have occurred at the same time, this example preferentially selected switch event E06 (net disconnection) (priority: E06 > E04). When switch event E04 has occurred prior to switch event E06, mode transition corresponding to the event that has occurred earlier is designated irrespective of the priority (mode transition corresponding to the event that has occurred later is designated after the first mode transition).

FIG. 29 shows an example of transition rule 1 upon making automatic mode transition from a given mode to another mode. A plurality of kinds of transition rules may be used in this case. For example, as transition rule 2 which is used together with transition rule 1 in FIG. 29 as needed, a second transition rule ["event generated by the system upon occurrence of abnormal circumstances" > "user event" > "ENAV event"] may be applied.

Note that examples of the abnormal circumstances include an error that has occurred during execution of a system program which controls the operation of the overall apparatus in FIG. 1, a computer virus that has been found upon downloading Web contents from the Internet, and so forth.

The relationship between the mode transition and DVD-Video player 100 explained using FIG. 1 can be summarized as follows. That is, ENAV engine 300 in FIG. 1 has a first interface (400, 400*) for receiving ENAV contents 30 from DVD video disc 1 which has a volume space complying with the DVD-Video standard, and a second interface (400W, 400W*) for acquiring other ENAV contents (Web contents 30W) from a communication line (Internet).

Assume that a state wherein DVD video disc 1 is loaded in DVD-Video player 100, and the second interface (400W, 400W*) is disconnected from the communication line (net disconnection) is off-line mode M1, a state wherein DVD video disc 1 is ejected from DVD-Video player 100, and the second interface (400W, 400W*) is disconnected from the communication line (net disconnection) is on-line mode M2, and a state wherein DVD video disc 1 is loaded in DVD-Video player 100, and the second interface (400W, 400W*) is connected to the communication line (net connection) is mixed mode M3. Then, if a switch trigger (a trigger due to disc insertion/ejection or net connection/disconnection; corresponding to switch events E01 to E06) is detected, mode transition is automatically made among off-line mode M1, on-line mode M2, and mixed mode M3 (in accordance with a predetermined transition rule exemplified in FIG. 29).

Note that the present invention is not limited to the aforementioned embodiments, and various modifications and changes may be made without departing from the scope of the invention when it is practiced. The respective embodiments may be combined as needed as long as possible, and combined effects can be obtained in such case.

For example, the ENAV engine of the present invention can be incorporated in a Hi-vision compatible-DVD-Video system (a semi-Hi-Vision system using 650-nm laser or a full-Hi-Vision system using 405-nm laser), which will be realized in the near future, without disturbing system compatibility.

The functions of the player in FIG. 1 can be implemented by software using a personal computer which comprises a DVD disc drive and high-speed CPU/MPU. That is, DVD player 100 corresponding to FIG. 1 can be virtually created on a high-performance personal computer (such virtual DVD player on the personal computer is implemented in commercially available personal computers and some game machines). In this case, the present invention can be practiced in the form of novel software, which utilizes hardware, i.e., an existing personal computer, and is installed in that personal computer.

Furthermore, the embodiments include inventions of various stages, and various inventions can be extracted by appropriately combining a plurality of required constituent elements disclosed in this application. For example, if at least one of the effect of the present invention or an effect upon practicing the present invention is obtained even when one or a plurality of required constituent elements are omitted from all the required constituent elements in the embodiments, the arrangement from which constituent elements are omitted can be extracted as the invention.

FIG. 34 is a flow chart for explaining an example of recording processes of information on an information medium such as a DVD-Video disc, DVD-Audio disc, a hard disc, or the like.

As shown in FIG. 34, AV contents of DVD-Video (e.g., DVD-Video contents 10 in FIG. 2) are recorded in a specific portion (DVD-Video Area in FIG. 30 or 31) of the volume space (step ST602). Then, navigation contents (e.g., any of ENAV contents 30A-30C in FIG. 2) are recorded in a given portion (Other Recording Area in FIG. 30 or part of DVD-Video Area in FIG. 31) (step ST604). Incidentally, an order of recording steps ST602 and ST604 may be exchanged.

### <SUMMARY OF ENAV SYSTEM>

An ENAV (Enhanced NAVigation) specification, applied to the embodiment of the present invention, enables a DVD player to realize advanced interactively, and new content defined in the ENAV specification is called "ENAV content." The ENAV content can be recorded with DVD-Video content on a DVD-Video disc and some of ENAV content can be recorded on (or sent via) a web server. Also, the current DVD-Video specification itself is not affected by the ENAV specification, that is, the ENAV specification is just "extension" of the DVD-Video specification. The ENAV specification defines ENAV content and also defines a mechanism to communicate between DVD-Video and ENAV playback.

ENAV content consists of (or comprises) following elements, called "ENAV elements":
Markup Language (XHTML, SMIL);
Script Language (ECMAScript) with particular APIs for DVD;
Cascading Style Sheet (CSS);
Image (JPEG, PNG);
Audio (AC-3 (Trademark), MPEG audio, DTS (Trademark), SDDS (Trademark));
Animation (MNG, XSS, Macromedia Flash (Trademark)); and
Text/Font.

As for Markup Language, XHTML document controls a display layout, display size and display/output timing and also controls synchronization to display/output above Image data, Audio data, Animation data and Text/Font data in conjunction with DVD-Video content. Meanwhile, SMIL controls only display of SVG animation.

ENAV content can exist not only in a disc but in a server. But, at least DVDINDEX.HTM file, XHTML document for start-up may be recorded under DVD_ENAV directory on a disc. Also, Files of ENAV content are delivered from a server via Internet after authorization between an Enhanced DVD player and the server by means of the disc ID of Enhanced DVD disc and/or player ID of Enhanced DVD player. After the completion of authorization, if an Enhanced DVD disc is ejected, deliver of ENAV content from the server can be stopped and/or the playback of ENAV content can be stopped.

Enhanced DVD player, which has capability to play back ENAV content, has two modes; one is Video mode, the other is Enhanced Navigation mode.

In Video mode, DVD-Video content is played back according to Navigation Information in DVD-Video content, and ENAV content is not played back even if it is recorded on a disc. So, in this mode, behavior of a player is as same as a legacy DVD-Video player, that is, First Play PGC (FP_PGC) may be played back at first. In Video mode, only one Screen display exists: Full Video Screen.

Enhanced Navigation mode has two Screen displays: Full Screen display and Mixed Screen display. In Full Screen display, a player plays back both DVD-Video content and ENAV content simultaneously. In Mixed Screen display, a player also plays back both DVD-Video content and ENAV content, and both contents are displayed simultaneously.

Note: User operation and 'looks and feels' might be different in Full Screen Display from Full Video Screen because playback and user operations are handled by ENAV content.

In Enhanced Navigation mode, between Full Screen display and Mixed Screen Display, it is possible to switch Screen display as a function of ENAV content or a player's function (i.e., from Full Screen display to Mixed Screen display / from Mixed Screen display to Full Screen display). But it is prohibited to switch between modes (Video Mode and Enhanced Navigation Mode) during a mode being activated.

In Enhanced Navigation mode, a player may ignore FP_PGC and may play back DVDINDEX.HTM file for startup in ENAV content on a disc firstly, and then plays back according to the instruction of ENAV content.

The system model for Enhanced DVD player is introduced in this specification. It consists of (or comprises) two engines, one is DVD-Video playback engine to play back DVD-Video content and the other is ENAV engine to play back ENAV content and also to control DVD-Video playback engine. This means the player is extended one from a legacy DVD-Video player.

DVD-Video playback engine consists of (or comprises) a legacy DVD-Video playback engine and the following additional functions, which are utilized by ENAV content to control DVD-Video playback;

Function to control DVD-Video playback in response to "DVD control" from ENAV engine;

Function to inform "DVD trigger" to ENAV engine, which are some events required by ENAV content; and

Function to inform "DVD status", which are some of properties, such as player status/latest playback status etc, in response to the request from ENAV engine.

ENAV engine includes ENAV Buffer, XHTML+SMIL/CSS Parser, XHTML/CSS Layout Manager, ECMAScript Interpreter & DOM manipulator, SMIL Timing Engine, ENAV Interface Handler, Element Decoders, AV Renderer, Buffer Manager, and Network Manager.

### # ENAV Buffer

ENAV content on both a disc and a server is loaded to the buffer for continuous/seamless playback of DVD-Video content, and the buffer can be managed by Buffer Manager via Buffer control. ENAV Buffer consists of (or comprises) ENAV-Unit Buffer (for XHTML document, Image, Non-synchronized audio with DVD-Video and Animation), Synchronized Audio Buffer and Font Buffer. The ENAV-Unit Buffer and the Synchronized Audio Buffer consist of (or comprises) two buffers respectively. One buffer is for playback and the other buffer is for download, each role changes by turns. The two-buffer can be used as one-buffer, for instance, in case that all of ENAV elements are read to the buffer before playback of ENAV content.

ENAV-Unit Buffer-is the buffers to store ENAV-Unit, which is composed of (or may be formed of) at lest one XHTML document, Image, Non-synchronized audio and Animation.

Before starting playback of DVD-Video synchronized with ENAV contents, at least one ENAV-Unit is preloaded from a disc or a server. When another ENAV-Unit is loaded from a disc during the playback of DVD-Video, seamless playback of DVD-Video is not guaranteed. When another ENAV-Unit is downloaded from a server during the playback of DVD-Video, seamless playback of DVD-Video is guaranteed by means of the downloading information, which includes name/location/size/content type of ENAV elements.

### # XHTML+SMIL/CSS Parser

XHTML document, composed of text information, some inline style, ECMAScript and CSS (Cascading Style Sheet) is read into XHTML parser. The XHTML parser verifies and parses the document into internal forms of objects, DOM-tree, based on definition of DOM (Document Object Model).

CSS parser verifies and parses CSS style sheet grammar and builds @rules and style rule sets list. CSS parser receives inline style information from XHTML parser or external CSS style sheet indicated by XHTML parser's style sheet link information.

### # XHTML/CSS Layout Manager

XHTML/CSS Layout Manager generates layout information, which includes box dimension and position of it, by means of DOM-tree from XHTML+SMIL/CSS Parser.

### # ECMAScript Interpreter & DOM manipulator

ECMAScript interpreter verifies and parses ECMAScript and executes codes indicated by parsed one.

DOM manipulator parses DOM-tree with style information from XHTML+SMIL/CSS Parser, and DOM manipulator registers events defined in this specification. ENAV event from DVD-Video playback engine or user interaction via ENAV Interface Handler is notified to ECMAScript Interpreter & DOM manipulator. Then the registered event handler is called.

An event takes role of a trigger for activating ECMAScript functions controlling objects, which is called as ENAV command. Meanwhile, ECMAScript Interpreter & DOM manipulator knows DVD-Video playback status by reading values in Property Buffer of ENAV Interface Handler via ENAV property.

### # SMIL Timing Engine

SMIL Timing Engine verifies and parses SMIL tags in XHTML document for control of SVG animation. Then SMIL Timing Engine provide timing and synchronization information for display of SVG animation.

### # ENAV Interface Handler

ENAV Interface Handler has functionalities of translation from/to DVD-Video playback engine to/from ECMAScript Interpreter or SMIL Timing Engine as follows. Also, ENAV Interface Handler receives user trigger and translates each event for ECMAScript Interpreter and DOM manipulator.

"DVD trigger" from DVD-Video playback engine or "User trigger" from User Interaction is translated to "ENAV event".

"DVD status" from DVD-Video playback engine is translated to "ENAV property". The DVD status information is stored in Property Buffer in ENAV Interface Handler.

According to "ENAV command", ENAV Interface Handler controls DVD-Video playback engine, Element Decoders, AV Renderer and Buffer Manager.

"ENAV control" from SMIL Timing Engine is translated to "DVD control"

### # Element Decoder

Element Decoders decodes Audio, Image, Animation and Text/Font data, which are controlled by ECMAScript Interpreter & DOM manipulator and SMIL Timing Engine via Element control. All elements except audio data synchronized with DVD-Video refer ENAV timing information provided by ENAV System Clock, but synchronized audio data refers DVD timing information provided by ENAV Interface Handler.

### # AV Renderer

AV Renderer renders XHTML document and decoded ENAV elements from Element Decoder with layout information from XHTML/CSS Layout Manager. That is, AV Renderer has functionality to convert pixel aspect ratio of ENAV element, to re-size the ENAV element and to layout ENAV elements, according to the layout information. As for audio, AV Renderer mixes (or switches) ENAV audio with the audio in DVD-Video content.

Also, AV Renderer switches Screen Display between Full Screen Display and Mixed Screen Display in Enhanced Navigation Mode, according to AV output control from ENAV Interface Handler.

### # Buffer Manager

Buffer Manager manages ENAV content in ENAV Buffer according to Buffer control from ENAV Interface Handler. For instance, Buffer Manager loads or discards ENAV content on both a disc and a server to/from the buffer. The information for buffer management is described in XHTML document or other file as download information.

### # Network Manager

Network Manager has a function to control connection/disconnection to network, and also to measure bandwidth and response time from a server.

### [Event Generation]

As an example, in the system model, an event from DVD-Video playback is executed in following process.
1. DVD-Video playback engine outputs "DVD trigger" to ENAV Interface Handler when an event happens.
2. ENAV Interface Handler reads status information of DVD-Video playback engine in response to the "DVD trigger", if ENAV Interface Handler needs the status value for "DVD trigger".
3. ENAV Interface Handler stores the associated value.
4. ENAV Interface Handler outputs "ENAV event" with the associated value.

### [Reading status]

As an example, in the system model, reading property is executed in following process.
1. DVD-Video playback engine inform status information ("DVD status") to Property Buffer in ENAV Interface Handler when status changes and keep latest status information in the buffer. Regarding how much size is necessary for the buffer, how long the status information is stored and when the status information is updated.
2. ECMAScript Interpreter/SMIL Timing Engine requests status information to ENAV Interface Handler.
3. ENAV Interface Handler returns status information to ECMAScript Interpreter/SMIL Timing Engine. ("ENAV property")

### [Command Execution]

As an example, in the system model, a command is executed in following process:
1. ECMAScript Interpreter outputs ENAV command to ENAV Interface Handler. ("ENAV command")
2. ENAV Interface Handler outputs DVD control to DVD-Video playback engine. ("DVD control")
3. DVD-Video playback engine returns the associated value to ENAV Interface Handler in response to DVD control.
4. ENAV Interface Handler returns the associated value to ECMAScript Interpreter.

### <Summary of Embodiments>

<01> As a mechanism that maintains compatibility to the existing DVD-Video standard allows a wide variety of video playback, ENAV contents 30 are recorded on disc 1 which includes the configuration according to the existing DVD-Video standard. ENAV contents 30 need not be played back by a conventional DVD-Video player according to the DVD-Video standard, but can be played back by DVD-Video player 100 according to an embodiment of the present invention (see embodiments shown in FIGS. 30 and 31).
<02> DVD-Video player 100 according to an embodiment of the present invention can use not only ENAV contents 30 recorded on disc 1, but also similar ENAV contents (Web contents) 30W that can be downloaded from the communication line such as the Internet or the like (see an embodiment shown in FIG. 1).
<03> AV information contained in DVD-Video contents 10 recorded on disc 1, and that contained in ENAV contents 30 (and/or ENAV contents 30W) can be played back in synchronism, connection, or combination with each other in accordance with a predetermined sequence (ENAV playback information described in markups or scripts) (see embodiments shown in FIGS. 2 to 24).
<04> In order to allow the user to freely switch playback of DVD-Video contents 10 and/or that of ENAV contents 30 (Web contents 30W), off-line mode (a mode for playing back DVD-Video intact) M1, on-line mode (a mode for playing back more interactive video via a communication by means of the Internet or the like) M2, and mixed mode (a mode that can attain more interactive playback using the Internet or the like while playing back DVD-Video) M3 of the on-line and off-line modes, can be used as needed (see embodiments of FIGS. 25 to 28).
<12> Mode transition can be automatically made among a plurality of modes, i.e., on-line mode M1, off-line mode M2, and mixed mode M3 in accordance with a predetermined rule (see an embodiment of FIG. 29).
<13> In DVD-Video player 100 according to an embodiment of the present invention, event generation·command/property processor 320 operates upon receiving a DVD event signal and/or DVD status signal from DVD-Video playback controller 220. For this reason, unlike an arrangement that sends a DVD control signal from processor 320 to controller 220, ENAV control according to playback (event/status) of the DVD disc can be implemented (see embodiments of FIGS. 1 and 20).

According to the present invention, a wide variety of interactive features can be added to DVD-Video contents playback while assuring compatibility (at least upward compatibility) to the current DVD-Video (and/or Audio) standard (version 1.0).

## Claims

1. An information medium (1 in FIG 30 or 31) to be used with an enhanced navigation system which comprises a playback engine (200) and a navigation engine (300),
said medium having a volume space including a volume/file structure information area, a video area and another recording area, wherein said volume space comprises
AV contents (VTS in FIG. 30 or 31) configured, to be played back by said playback engine (200); and
navigation contents (30 In FIG. 30 or 31) configured to be handled or treated by said navigation engine (300);
**CHARACTERIZED IN THAT**
said video area includes the AV contents complying with a predetermined standard;
said video area (FIG. 31) or said another recording area (FIG. 30) includes the navigation contents which can be played back in association with the AV contents; and
the navigation contents (30) have playback control information (ENAV playback Information) configured to control a layout or size of object to be displayed on a display screen so that the AV contents are played back in combination, connection, or synchronism with playback of the navigation contents.

2. The medium of claim 1, wherein the navigation contents include at least one of a document, image data, animation data, and audio data, and said document includes at least one of a mark-up language including text data, and scripting language.

3. An enhanced navigation system configured for use with the medium of claims 1 or 2, **characterized in that** said system comprises:
a player unit (100) configured to reproduce recorded contents from the medium;
a playback engine (200) configured to play back the AV contents of the medium, and to produce status information (DVD status signal);
a navigation engine (300) responsive to the status information from said playback engine (200) and configured to play back or to reproduce the navigation contents of the medium; and means adapted to control a layout or size of object to be displayed on a display screen so that the AV contents are played back in combination, connection, or synchronism with playback of the navigation contents.

4. A reproducing method using the medium of claim 1 or 2 **characterized in that** said method comprises a step of reproducing the AV contents and a step of reproducing the navigation contents to control a layout or size of object to be displayed on a display screen so that the AV contents are played back in combination, connection, or synchronism with playback of the navigation contents.

5. A reproducing apparatus using the medium of claim 1 or 2 **characterized in that** said apparatus comprises means (200) for reproducing the AV contents; means (300) for reproducing the navigation contents; and means adapted to control a layout or size of object to be displayed on a display screen so that the AV contents are played back in combination, connection, or synchronism with playback of the navigation contents.

## Patentansprüche

1. Informationsmedium (1 in Fig. 30 oder 31), das mit einem verbesserten Navigationssystem zu verwenden ist, das eine Wiedergabemaschine (200) und eine Navigationsmaschine (300) umfaßt,
wobei das Medium einen Datenträgerplatz aufweist, der einen Datenträger/Dateistrukturinformationsbereich, einen Videobereich und einen weiteren Aufzeichnungsbereich umfaßt, wobei der Datenträgerplatz umfaßt
AV-Inhalt (VTS in Fig. 30 oder 31), der konfiguriert ist, um durch die Wiedergabemaschine (200) wiedergegeben zu werden; und
Navigationsinhalt (30 in Fig. 30 oder 31), der konfiguriert ist, um durch die Navigationsmaschine (300) gehandhabt oder behandelt zu werden;
**dadurch gekennzeichnet, dass**
der Videobereich den mit einem vorbestimmten Standard übereinstimmenden AV-Inhalt umfaßt;
der Videobereich (Fig. 31) oder der andere Aufzeichnungsbereich (Fig. 30) den Navigationsinhalt umfaßt, der in Verbindung mit dem AV-Inhalt wiedergegeben werden kann; und
der Navigationsinhalt (30) eine Wiedergabesteuerinformation (ENAV-Wiedergabeinformation) aufweist, der konfiguriert ist, um ein Layout oder eine Größe eines anzuzeigenden Objekts auf einem Bildschirm zu steuern, so dass der AV-Inhalt in Kombination, Verbindung oder Synchronisation mit der Wiedergabe des Navigationsinhalts wiedergegeben wird.

2. Medium gemäß Anspruch 1, bei dem der Navigationsinhalt mindestens eines der folgenden umfaßt: ein Dokument, Bilddaten, Animationsdaten und Audiodaten, und das Dokument mindestens eine Mark-up-Sprache mit Textdaten und/oder eine Skriptsprache aufweist.

3. Verbessertes Navigationssystem, das zur Verwendung mit dem Medium von Ansprüchen 1 oder 2 konfiguriert ist, **dadurch gekennzeichnet, dass** das System umfaßt:
eine Abspieleinrichtungseinheit (100), die konfiguriert ist, um aufgezeichneten Inhalt von dem Medium wieder zu reproduzieren;
eine Wiedergabemaschine (200), die konfiguriert ist, um den AV-Inhalt des Mediums wiederzugeben und Statusinformation (DVD Statussignal) zu erzeugen;
eine Navigationsmaschine (300), die auf die Statusinformation von der Wiedergabemaschine (200) antwortet und konfiguriert ist, um den Navigationsinhalt des Mediums wiederzugeben oder zu reproduzieren; und
eine Einrichtung, die angepasst ist, um ein Layout oder Größe eines auf einem Bildschirm anzuzeigenden Objekts zu steuern, so dass der AV-Inhalt in Kombination, Verbindung oder Synchronisation mit der Wiedergabe des Navigationsinhalts wiedergegeben wird.

4. Reproduktionsverfahren mit dem Medium von Anspruch 1 oder 2, **dadurch gekennzeichnet, dass** das Verfahren einen Schritt eines Reproduzierens des AV-Inhalts und einen Schritt eines Reproduzierens des Navigationsinhalts umfaßt, um ein Layout oder eine Größe eines auf einem Bildschirm anzuzeigenden Objekts zu steuern, so dass der AV-Inhalt in Kombination, Verbindung oder Synchronisation mit der Wiedergabe des Navigationsinhalts wiedergegeben wird.

5. Reproduktionsvorrichtung mit dem Medium von Anspruch 1 oder 2, **dadurch gekennzeichnet, dass** die Vorrichtung umfaßt: eine Einrichtung (200) zum Reproduzieren des AV-Inhalts; eine Einrichtung (300) zum Reproduzieren des Navigationsinhalts; und eine Einrichtung, die angepasst ist, um ein Layout oder eine Größe eines auf einem Bildschirm anzuzeigenden Objekts zu steuern, so dass der AV-Inhalt in Kombination, Verbindung oder Synchronisation mit der Wiedergabe des Navigationsinhalts wiedergegeben wird.

## Revendications

1. Support d'informations (1 sur la figure 30 ou 31) à utiliser avec un système de navigation amélioré qui comprend un moteur de lecture (200) et un moteur de navigation (300),
ledit support présentant un espace de volume comprenant une zone d'informations de structure de volume/fichier, une zone vidéo et une autre zone d'enregistrement, dans lequel ledit espace de volume comprend
un contenu AV (VTS sur la figure 30 ou 31) configuré pour être lu par ledit moteur de lecture (200) ; et
un contenu de navigation (30 sur la figure 30 ou 31) configuré pour être géré ou traité par ledit moteur de navigation (300) ;
**caractérisé en ce que**
ladite zone vidéo comprend le contenu AV se conformant à une norme prédéterminée ;
ladite zone vidéo (figure 31) ou ladite autre zone d'enregistrement (figure 30) comprend le contenu de navigation qui peut être lu en association avec le contenu AV ; et
le contenu de navigation (30) comporte des informations de commande de lecture (informations de lecture ENAV) configurées pour commander une présentation ou une dimension d'un objet à afficher sur un écran d'affichage de sorte que le contenu AV est lu en combinaison, en relation ou en synchronisme avec la lecture du contenu de navigation.

2. Support selon la revendication 1, dans lequel le contenu de navigation comprend au moins un élément parmi un document, des données d'image, des données d'animation et des données audio, et ledit document comprend au moins un élément parmi un langage de balisage comprenant des données de texte et un langage script.

3. Système de navigation amélioré configuré pour une utilisation avec le support selon la revendication 1 ou 2, **caractérisé en ce que** ledit système comprend :
une unité de lecteur (100) configurée pour reproduire le contenu enregistré à partir du support ;
un moteur de lecture (200) configuré pour lire le contenu AV du support, et pour produire des informations d'état (signal d'état DVD) ;
un moteur de navigation (300) répondant aux informations d'état dudit moteur de lecture (200) et configuré pour lire ou reproduire le contenu de navigation du support ; et
des moyens adaptés pour commander une présentation ou une dimension d'un objet à afficher sur un écran d'affichage de sorte que le contenu AV est lu en combinaison, en relation ou en synchronisme avec la lecture du contenu de navigation.

4. Procédé de reproduction utilisant le support selon la revendication 1 ou 2, **caractérisé en ce que** ledit procédé comprend une étape consistant à reproduire le contenu AV et une étape consistant à reproduire le contenu de navigation pour commander une présentation ou une dimension d'un objet à afficher sur un écran d'affichage de sorte que le contenu AV est lu en combinaison, en relation ou en synchronisme avec la lecture du contenu de navigation.

5. Appareil de reproduction utilisant le support selon la revendication 1 ou 2, **caractérisé en ce que** ledit appareil comprend des moyens (200) permettant de reproduire le contenu AV, des moyens (300) pour reproduire le contenu de navigation ; et des moyens adaptés pour commander une présentation ou une dimension d'un objet à afficher sur un écran d'affichage de sorte que le contenu AV est lu en combinaison, en relation ou en synchronisme avec la lecture du contenu de navigation.
